# EUROPÄISCHE PATENTSCHRIFT

(11) **EP 3 850 312 B1**
(45) Veröffentlichungstag und Bekanntmachung des Hinweises auf die Patenterteilung: **14.06.2023**
(21) Anmeldenummer: 19756140.0
(22) Anmeldetag: 13.08.2019
(51) Int. Cl.: G01D 21/00, G01F 1/00, G01F 23/00, G01F 23/284

(54) **MESSGERÄTE-SYSTEM SOWIE DAMIT GEBILDETE MESSANORDNUNG**
MEASURING-DEVICE SYSTEM AND MEASURING ASSEMBLY FORMED THEREWITH
SYSTÈME D'APPAREILS DE MESURE ET AGENCEMENT DE MESURE CONSTITUÉ DUDIT SYSTÈME

(30) Priorität: 10.09.2018 DE 102018122014
(43) Veröffentlichungstag der Anmeldung: 21.07.2021
(73) Patentinhaber: Endress + Hauser Flowtec AG, 4153 Reinach (CH)
(72) Erfinder: KIRST, Michael, 79539 Lörrach (DE)
(74) Vertreter: Hahn, Christian
(86) Internationale Anmeldenummer: PCT/EP2019/071707
(87) Internationale Veröffentlichungsnummer: WO 2020/052892

(56) Entgegenhaltungen:
- DE-A1-102007 021 099
- US-A- 5 960 375
- US-A1- 2009 295 367
- US-A1- 2010 082 122
- US-A1- 2017 356 780

## Beschreibung

Die Erfindung betrifft ein Meßgeräte-System mit zwei Meßgeräten sowie einer Auswerte- und Versorgungselektronik sowie eine mittels eines solchen Meßgeräte-Systems gebildete Meßanordnung.

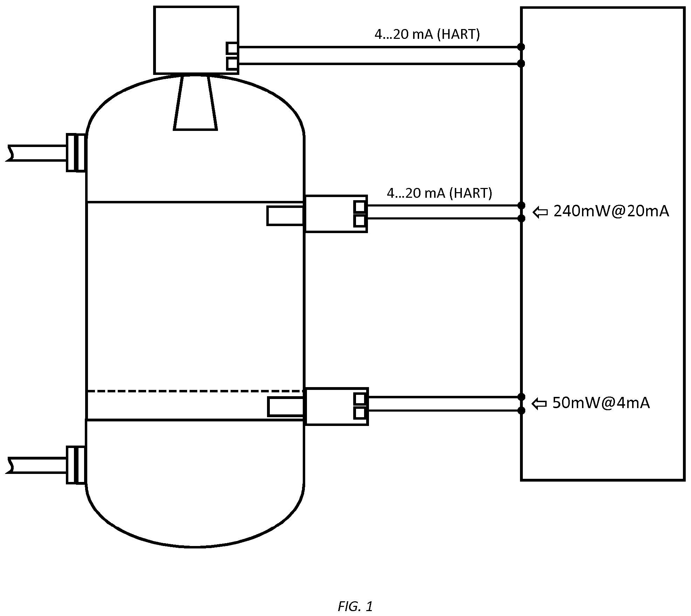

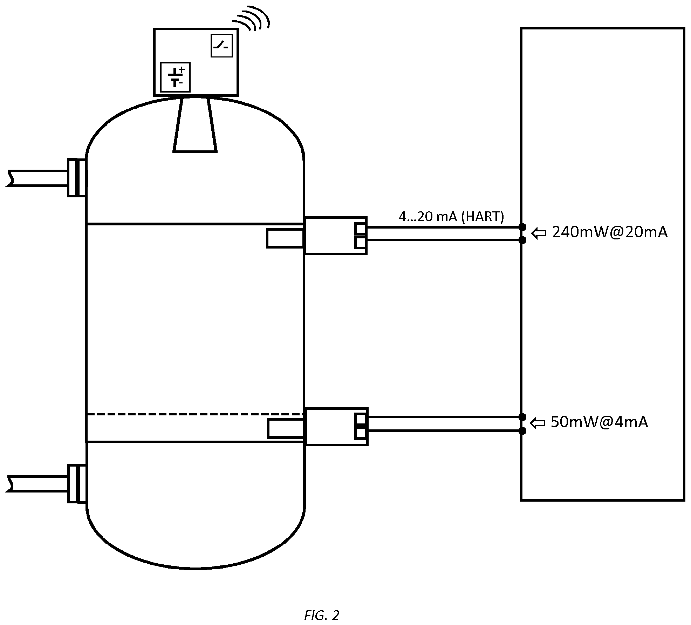

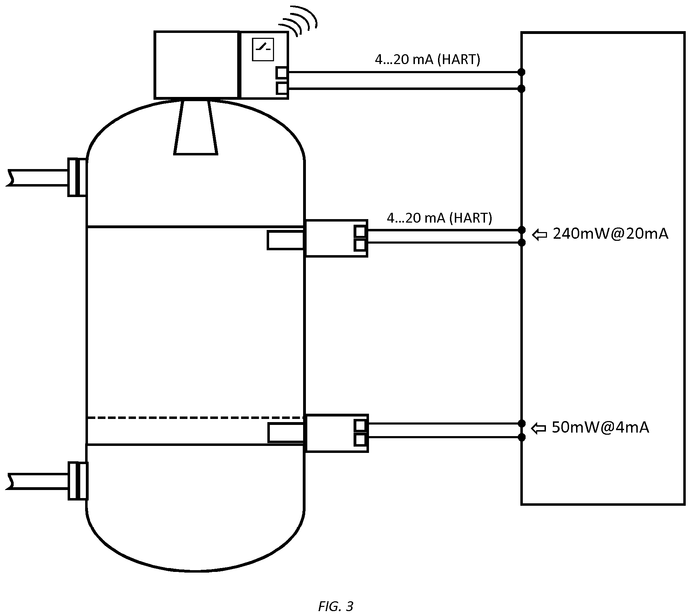

In der industriellen Meß- und Automatisierungstechnik werden zur Ermittlung von Meßwerten für physikalische oder chemische Meßgrößen von in einem - beispielsweise mittels eines oder mehrerer Tanks und/oder einer oder mehrerer Rohrleitungen gebildeten, Leitungssystem geführten strömungsfähigen Meßstoffen - beispielsweise einem Gas, einer Flüssigkeit oder einer Dispersion - verschiedenartige, gelegentlich auch als "Feldgeräte" bzw. "Feld-Meßgeräte" bezeichnete, Meßgeräte verwendet. Häufig interessierende Meßgrößen können beispielsweise das jeweilige Medium charakterisierende Stoffparameter, wie etwa ein pH-Wert, ein Sauerstoff-Gehalt, eine elektrische Leitfähigkeit, eine Dichte oder eine Viskosität, oder auch mit dem jeweiligen Medium assoziierte Prozeßparameter, wie etwa eine Temperatur, ein Druck, ein Volumenstrom, ein Massenstrom oder ein Füllstand, oder auch dafür vorgegebene Grenz- bzw. Schwellenwerte sein. Dementsprechend häufig verwendete Feld-Meßgeräte sind u.a. Füllstandsmeßgeräte, Druck-Meßgeräte, Durchfluß-Meßgeräte, Temperatur-Meßgeräte, pH-Meßgeräte, Sauerstoff-Meßgeräte oder Leitfähigkeits-Meßgeräte oder auch entsprechende Schaltgeräte, insb. nämlich entsprechende Grenzschalter. Beispiele für solche Meßgeräte bzw. deren Verwendung in vorbezeichnete Leitungssysteme involvierenden Prozeßsteuerungssystemen sind u.a. in der US-A 2001/0016802, der US-A 2004/0172205, der US-A 2006/0161359, der US-A 2008/0268784, der US-A 2009/0253388, der US-A 2010/0201342, der US-A 2011/0134817, der US-A 2013/0009472, der US-A 2013/0278222, der US-A 2013/0333465, der US-A 2014/0070609, der US-A 2015/0039924, der US-A 2016/0099754, der US-A 2016/0043730, der WO-A 96/12993, der WO-A 2005/017851, der WO-A 2005/116787, der WO-A 2006/025918, der WO-A 2009/003146, der WO-A 2009/003148, der WO-A 2009/114064, der WO-A 2009/154744, der WO-A 2011/119892, der WO-A 2012/084280, der WO-A 2017/041987, der WO-A 2017/041988, der WO-A 2017/041989, der WO-A 2018/050422, der DE102007021099A1 oder auch der nicht vorveröffentlichten internationalen Anmeldung PCT/EP2018/066250 gezeigt. Oftmals sind dabei auch solche Meßanordnungen etabliert, bei den zwei oder mehr Meßgeräte jeweils zu einem Meßgeräte-System zusammengefasst, nämlich in unmittelbarer Nähe zueinander an der selben Rohrleitung bzw. - wie auch in den Fig. 1, 2 oder 3 schematisiert dargestellt - am selben Tank angeordnet sind, und mit denen jeweils voneinander abweichende Meßgrößen oder aber auch die gleiche Meßgröße - beispielsweise diversitär, redundant oder hinsichtlich des Meßbereichs einander ergänzend - gemessen werden können.

Ein Meßgerät der in Rede stehenden Art weist einen - typischerweise einen einzigen - Meßgrößen-Aufnehmer, einen damit elektrisch verbundenen - beispielsweise mittels eines oder mehrerer Mikroprozessoren gebildeten bzw. programmierbaren - elektronischen Meßumformer sowie ein - typischerweise druckfestes, ggf. auch explosionssicheres den Anforderungen der Zündschutzart "Druckfeste Kapslung (Ex-d)" gemäß EN 60079-1:2007 genügendes, und gegen Eindringen von Staub oder Spritzwasser schützendes, ggf. auch zumindest den Anforderungen der Schutzart IP 54 gemäß DIN EN 60529:2014-09 genügendes - Umformer-Gehäuse innerhalb dem der Meßumformer geschützt untergebracht ist, auf. Regelmäßig sind Meßumformer von Feld-Meßgeräten auch so ausgestaltet, daß sie der Zündschutzart "Geräteschutz durch Eigensicherheit (Ex-i)" gemäß EN 60079 11 :2012 und/oder der Zündschutzart "Erhöhte Sicherheit (Ex-e)" gemäß EN 60079-7:2007 genügen können. Der - gelegentlich auch als Sensor, Detektor, Primärwandler oder beispielsweise auch Meß-Fühler bezeichnete - Meßgrößen-Aufnehmer ist dafür eingerichtet, auf die jeweils zu erfassende Meßgröße anzusprechen sowie ein - typischerweise elektrisches - Aufnehmersignal bereitzustellen, derart, daß nämliches Aufnehmersignal einer Änderung der Meßgröße mit einer Änderung wenigstens eines Signalparameters, beispielsweise einer elektrischen Spannung oder einem elektrischen Strom, folgt. Der - gelegentlich auch als Transmitter oder beispielsweise auch als Messumsetzer bezeichnete - Meßumformer wiederum ist dafür eingerichtet, das vorbezeichnete Aufnehmersignal zu empfangen und anhand dessen die wenigstens eine Meßgröße aufeinanderfolgend quantisierende Meßwerte zu ermitteln. Die in der US-A 2001/0016802, US-A 2006/0161359, WO-A 2005/017851, WO-A 2009/114064 oder WO-A 2012/084280 gezeigten Feldgeräte sind als für die industrielle Meß- und Automatisierungstechnik typische Zweileiter-Meßgeräte ausgebildet, nämlich solche Feldgeräte, bei denen der jeweilige Meßumformer jeweils eine, beispielsweise auch als Schaltausgang und/oder TTY-Schnittstelle ausgebildete, Schnittstellenschaltung zur leitungsgebundenen Energiespeisung des Meßgeräts sowie zur leitungsgebundenen Signalübertragung aufweist. Der jeweilige Meßumformer ist zudem über entsprechende elektrische Leitungen auch mit einer vom jeweiligen Meßgerät typischerweise räumlich entfernt angeordneten, beispielsweise auch als Komponente eines übergeordneten elektronischen Datenverarbeitungssystems bzw. eines das Meßgerät involvierenden Prozeßsteuerungssystems ausgebildete, Auswerte- und Versorgungselektronik elektrisch verbunden, derart, daß die Schnittstellenschaltung des Meßumformers unter Bildung einer sowohl nämliche Schnittstellenschaltung als auch die Auswerte- und Versorgungselektronik involvierenden Stromschleife an die Auswerte- und Versorgungselektronik elektrisch angeschlossen ist, und der Meßumformer ist zudem jeweils auch dafür eingerichtet, die anhand des Aufnehmersignals gewonnenen Meßwerte in ein Meßsignal, nämlich ein die Meßgröße repräsentierendes elektrisches, beispielsweise analoges oder auch binäres, Ausgangssignal der Schnittstellenschaltung zu wandeln.

Eine Auswerte- und Versorgungselektronik der vorbezeichneten Art ist wiederum dafür eingerichtet, elektrische Leistung, beispielweise mit einer elektrischen Spannung von mehr als 12 V (Volt) und/oder weniger als 45 V und einem elektrischen Strom von mehr als 3,6 mA und/oder weniger als 23 mA, in die vorbezeichnete Stromschleife einzuspeisen, und der Meßumformer ist eingerichtet, sowohl elektrische Leistung aus der Stromschleife zu beziehen als auch das Ausgangssignal an die Auswerte- und Versorgungselektronik zu senden, beispielsweise durch Lastmodulation eines Schleifenstroms, nämlich durch Modulation eines von der Auswerte- und Versorgungselektronik getriebenen elektrischen Stroms in der Stromschleife zu übermitteln. Im besonderen sind die Meßumformer dafür eingerichtet, das als Meßsignal dienliche Ausgangssignal als ein, beispielsweise zur Norm DIN IEC 60381-1:1985-11 konformes, Einheitssignal, insb. nämlich als ein Stromsignal, auszugeben und/oder das Ausgangssignal an die Auswerte- und Versorgungselektronik durch Lastmodulation des vorbezeichneten Schleifenstroms zu übermitteln, beispielsweise derart, daß der Schleifenstrom mittels der Schnittstellenschaltung in Abhängigkeit von der Meßgröße auf eine innerhalb eines Bereichs 4 - 20 mA liegende Stromstärke und/oder konform zu einer oder mehreren der Normen DIN IEC 60381-1:1985-11,

IEC 61784-1 CPF1 (Foundation Fieldbus), IEC 61784-1 CPF3:2016 (Profibus), IEC 61158 oder IEC 61784-1 CPF9 (HART) in der jeweils am 10.09.2018 gültigen Fassung eingestellt bzw. moduliert wird. Für den Fall, daß das Ausgangsignal ein lediglich zwei diskrete Werte annehmende binäres Schaltsignal ist, wird die Meßgröße typischerweise mit einer auf 4 mA oder auf 20 mA eingestellten Stromstärke des Schleifenstroms codiert.

Neben den vorbezeichneten, Meßwerte lediglich leitungsgebunden übertragenden, ggf. auch als Zweileiter-Meßgeräte ausgebildeten Feldgeräten kommen in immer mehr zunehmenden Maße aber auch solche Feldgeräte industrielle Meß- und Automatisierungstechnik zum Einsatz, bei denen der Meßumformer - alternativ oder in Ergänzung zur vorbezeichneten leitungsgebundenen Signalübertragung - eine Funkeinheit aufweist und bei denen der Meßumformer, wie u.a. in der US-A 2004/0172205, der US-A 2008/0268784, der US-A 2009/0253388, der US-A 2012/0306276, der US-A 2013/0009472, der US-A 2013/0333465, der WO-A 2005/116787, der WO-A 2006/025918, der WO-A 2009/003146, der WO-A 2009/003148, der WO-A 2017/041987, der WO-A 2017/041988, der WO-A 2017/041989 oder der WO-A 2018/050422 gezeigt, eingerichtet ist, das Aufnehmersignal in ein Funksignal, nämlich via Funkeinheit ausgesendete elektromagnetische Freiraumwellen zu wandeln, die eine Folge von zumindest einigen der vorbezeichneten Meßwerte kabellos übertragen. Der Meßumformer bzw. das damit gebildete Meßgerät kann dabei, wie u.a. in US-A 2013/0009472 gezeigt bzw. in der Fig. 2 angedeutet, als ein autarkes Meßgerät ausgebildet, nämlich mittels einer mit einem oder mehreren, ggf. auch wiederaufladbaren elektrochemischen Energiespeichern gebildeten Speicherschaltung von intern mit für den Betrieb erforderlicher elektrischer Energie versorgt sein und/oder als ein hybrides Meßgerät ausgebildet, nämlich - , wie u.a. in der US-A 2013/0333465 oder der WO-A 2017/041987 gezeigt bzw. auch in Fig. 3 angedeutet - über eine in eine Stromschleife der vorgenannten Art eingegliederte Schnittstellenschaltung leitungsgebunden von extern mit für den Betrieb erforderlicher elektrischer Energie versorgt sein. Die vorbezeichnete Funkeinheit ist typischerweise eingerichtet, zu einer der Normen IEEE 802.15.4 (WPAN, WirelessHART, ZigBee), IEEE 802.11 (WLAN, WiFi) oder IEEE 802.15.1 (Bluetooth) konforme Funksignale auszusenden und/oder zu empfangen. Die Funkeinheit kann zusammen mit anderen Komponenten des Meßumformers innerhalb des vorbezeichneten Umformer-Gehäuses oder - wie u.a. auch in der WO-A 2005/116787 oder der WO-A 2009/154744 gezeigt oder in Fig. 3 angedeutet - beispielsweise auch in einem eigenen, außen am Umformer-Gehäuse angebrachten Schutzgehäuse eines, gelegentlich auch als Wirelessadapter bezeichneten, eigenständigen Funkmoduls untergebracht sein.

Ein Nachteil von mittels einer solchen Funkeinheit Meßwerte übertragenden Feldgeräten ist u.a darin zusehen, daß einerseits für das Senden der Meßwerte mit akzeptabler Senderate und -reichweite eine vergleichsweise hohe elektrische Leistung benötigt wird und daß anderseits die im Meßgerät jeweils dauerhaft bzw. zumindest für eine vorgegeben Betriebszeit verfügbare elektrische Leistung typischerweise sehr limitiert ist, nämlich regelmäßig deutlich geringer als 100 mW (Milliwatt) ist, etwa aufgrund begrenzter Speicherkapazität des vorbezeichneten Energiespeichers und/oder aufgrund von Vorgaben hinsichtlich der vom Meßumformer jeweils zu erfüllenden Zündschutzart und/oder aufgrund eines regelmäßig auf vergleichsweise niedrige Stromstärken eingestellten Schleifenstroms, derart, daß die Senderate und/oder die Sendereichweite gelegentlich auch signifikant unterhalb dafür eigentlich benötigter Mindestwerte liegen können.

Ausgehend von vorbezeichnetem Stand der Technik besteht eine Aufgabe der Erfindung darin, mittels Meßgeräten der vorbezeichneten Art gebildete Meßanordnungen dahingehend zu verbessern, daß damit einerseits eine oder mehrere Meßgrößen in einem Leitungssystem innerhalb eines vorgebbaren Meßbereichs mit einer hohen Aktualisierungsrate sehr präzise erfaßt werden können und daß anderseits für eine oder mehrere der Meßgrößen ermittelte Meßwerte mit einer hohen Senderate und/oder hohen Sendereichweite drahtlos an die Auswerte- und Versorgungselektronik bzw. ein von der Meßanordnung entferntes, übergeordnetes elektronisches Datenverarbeitungssystem übermittelt werden können.

Zur Lösung der Aufgabe besteht die Erfindung in einem Meßgeräte-System, umfassend:
- ein, beispielsweise als Zweileiter-Feldgerät ausgebildetes, erstes Meßgerät mit einem ersten Meßgrößen-Aufnehmer, der eingerichtet ist, auf eine erste Meßgröße anzusprechen und ein, beispielsweise elektrisches, erstes Aufnehmersignal bereitzustellen, derart, daß nämliches erstes Aufnehmersignal einer Änderung der ersten Meßgröße mit einer Änderung wenigstens eines Signalparameters folgt, und mit einem mit dem ersten Meßgrößen-Aufnehmer elektrisch verbundenen, beispielsweise mittels wenigstens eines Mikroprozessors gebildeten, ersten Meßumformer, der eine, beispielsweise als Schaltausgang und/oder TTY-Schnittstelle ausgebildete, Schnittstellenschaltung sowohl zur leitungsgebundenen Signalübertragung als auch zur leitungsgebundenen Energiespeisung aufweist und der eingerichtet ist, nämliches erstes Aufnehmersignal zu empfangen und in ein Meßsignal, nämlich ein die erste Meßgröße repräsentierendes, beispielsweise als ein binärcodiertes Schaltsignal ausgebildetes, elektrisches Ausgangssignal der Schnittstellenschaltung zu wandeln;
- ein zweites Meßgerät mit einem zweiten Meßgrößen-Aufnehmer, der eingerichtet ist, auf eine zweite Meßgröße anzusprechen und ein, beispielsweise elektrisches, zweites Aufnehmersignal bereitzustellen, derart, daß nämliches zweites Aufnehmersignal einer Änderung der zweiten Meßgröße mit einer Änderung wenigstens eines Signalparameters folgt, und mit einem mit dem zweiten Meßgrößen-Aufnehmer elektrisch verbundenen, beispielsweise mittels wenigstens eines Mikroprozessors gebildeten, zweiten Meßumformer, der eine Schnittstellenschaltung zur leitungsgebundenen Energiespeisung sowie eine Funkeinheit aufweist und der eingerichtet ist, nämliches zweites Aufnehmersignal zu empfangen und in ein Funksignal, nämlich via Funkeinheit ausgesendete, eine Folge von die zweite Meßgröße quantisierenden Meßwerten kabellos übertragende elektromagnetische Freiraumwellen zu wandeln;
- sowie eine Auswerte- und Versorgungselektronik.

Beim erfindungsgemäßen Meßgeräte-System ist die Schnittstellenschaltung des ersten Meßumformers unter Bildung einer sowohl nämliche Schnittstellenschaltung als auch die Auswerte- und Versorgungselektronik involvierenden Stromschleife (2L) an die Auswerte- und Versorgungselektronik elektrisch angeschlossen und ist die Schnittstellenschaltung des zweiten Meßumformers an den ersten Meßumformer, beispielsweise nämlich dessen Schnittstellenschaltung und/oder die damit gebildete Stromschleife, elektrisch angeschlossen. Die Auswerte- und Versorgungselektronik ist zudem dafür eingerichtet, elektrische Leistung P1, beispielsweise mit einer elektrischen Spannung von mehr als 12 V (Volt) und/oder weniger als 45 V, in die Stromschleife einzuspeisen. Darüberhinaus ist der erste Meßumformer, beispielsweise nämlich dessen Schnittstellenschaltung, dafür eingerichtet, sowohl elektrische Leistung aus der Stromschleife zu beziehen als auch das Meßsignal an die Auswerte- und Versorgungselektronik zu senden, beispielsweise nämlich durch Modulation eines von der Auswerte- und Versorgungselektronik getriebenen elektrischen Stroms in der Stromschleife und ist der zweite Meßumformer, beispielsweise nämlich dessen Schnittstellenschaltung, dafür eingerichtet, elektrische Leistung aus der Stromschleife zu beziehen, beispielsweise nämlich auch den zweiten Meßaufnehmer und/oder die Funkeinheit in Abhängigkeit von einer momentanen Stromstärke eines elektrischen Stroms in der Stromschleife zu steuern. Das erste Meßgerät kann beispielsweise auch als ein Füllstandgrenzschalter, als ein Durchflußschalter oder auch als ein Druckschalter ausgebildet sein. Das zweite Meßgerät kann beispielsweise auch als ein Füllstandmeßgerät oder als ein Durchflußmeßgerät ausgebildet sein.

Desweiteren besteht die Erfindung auch in einer mittels einem solchen Meßgeräte-System gebildeten Meßanordnung, die außer nämlichem Meßgeräte-System ein, beispielsweise mittels eines Tanks und/oder einer Rohrleitung gebildetes, Leitungssystem, das dafür eingerichtet ist, ein strömungsfähiges Medium zu führen, umfaßt, wobei sowohl der erste Meßaufnehmer als auch der zweite Meßaufnehmer des Meßgeräte-Systems, beispielsweise mehr als 1 m (Meter) voneinander beabstandet, in das Leitungssystem eingesetzt ist.

Nach einer ersten Ausgestaltung des Meßgeräte-Systems der Erfindung ist ferner vorgesehen, daß die Auswerte- und Versorgungselektronik eingerichtet ist, das Meßsignal des ersten Meßgeräts zu verarbeiten, beispielsweise nämlich zu empfangen und auszuwerten. Diese Ausgestaltung der Erfindung weiterbildend ist ferner vorgesehen, daß die Auswerte- und Versorgungselektronik eingerichtet ist, das Meßsignal des ersten Meßgeräts zu digitalisieren und/oder unter Verwendung des Meßsignals des ersten Meßgeräts die erste Meßgröße repräsentierende, beispielsweise digitale, Meßwerte zu ermitteln.

Nach einer zweiten Ausgestaltung des Meßgeräte-Systems der Erfindung ist ferner vorgesehen, daß die Stromschleife wenigstens eine aus zwei, beispielsweise miteinander verdrillten, Einzeladern gebildete erste Zweidraht-Leitung aufweist, und daß sowohl eine erste Einzelader der ersten Zweidraht-Leitung als auch eine zweite Einzelader der ersten Zweidraht-Leitung an die Auswerte- und Versorgungselektronik elektrisch angeschlossen ist, beispielsweise derart, daß die erste Einzelader der ersten Zweidraht-Leitung eine Hinleitung der Stromschleife und/oder daß die zweite Einzelader der ersten Zweidraht-Leitung eine Rückleitung der Stromschleife bildet. Diese Ausgestaltung der Erfindung weiterbildend ist ferner vorgesehen, daß zumindest die erste Einzelader der ersten Zweidraht-Leitung an den zweiten Meßumformer, beispielsweise nämlich an eine mit der Schnittstellenschaltung des zweiten Meßumformers elektrisch verbundene erste Anschlußklemme des zweiten Meßumformers, elektrisch angeschlossen ist. Darüberhinaus kann zudem die zweite Einzelader der ersten Zweidraht-Leitung beispielsweise zum zweiten Meßumformer geführt, gleichwohl nicht mit dessen Schnittstellenschaltung elektrisch verbunden sein, beispielsweise nämlich an eine mit der Schnittstellenschaltung des zweiten Meßumformers elektrisch nicht verbundene zweite Anschlußklemme des zweiten Meßumformers elektrisch angeschlossen ist.

Nach einer dritten Ausgestaltung des Meßgeräte-Systems der Erfindung ist ferner vorgesehen, daß die Funkeinheit des zweiten Meßumformers eingerichtet ist, das Funksignal mit einer, beispielsweise anpassbaren und/oder weniger als 100mW (Milliwatt) betragenden, ersten Strahlungsleistung auszusenden.

Nach einer vierten Ausgestaltung des Meßgeräte-Systems der Erfindung ist ferner vorgesehen, daß die Stromschleife wenigstens eine aus zwei, beispielsweise miteinander verdrillten, Einzeladern gebildete erste Zweidraht-Leitung aufweist, und daß die Stromschleife wenigstens eine aus zwei, beispielsweise miteinander verdrillten, Einzeladern gebildete zweite Zweidraht-Leitung aufweist, wobei sowohl eine erste Einzelader der ersten Zweidraht-Leitung als auch eine zweite Einzelader der ersten Zweidraht-Leitung an die Auswerte- und Versorgungselektronik elektrisch angeschlossen ist, beispielsweise derart, daß die erste Einzelader der ersten Zweidraht-Leitung eine Hinleitung der Stromschleife und/oder daß die zweite Einzelader der ersten Zweidraht-Leitung eine Rückleitung der Stromschleife bildet. Diese Ausgestaltung der Erfindung weiterbildend ist ferner vorgesehen, daß sowohl eine erste Einzelader der zweiten Zweidraht-Leitung als auch eine zweite Einzelader der zweiten Zweidraht-Leitung an den ersten Meßumformer elektrisch angeschlossen ist, beispielsweise derart, daß die erste Einzelader der zweiten Zweidraht-Leitung an eine mit der Schnittstellenschaltung des ersten Meßumformers elektrisch verbundene erste Anschlußklemme des ersten Meßumformers elektrisch angeschlossen ist und daß die zweite Einzelader der zweiten Zweidraht-Leitung an eine mit der Schnittstellenschaltung des ersten Meßumformers elektrisch verbundene zweite Anschlußklemme des ersten Meßumformers elektrisch angeschlossen ist. Beispielsweise können dafür die erste Einzelader der zweiten Zweidraht-Leitung auch an eine mit der Schnittstellenschaltung des zweiten Meßumformers elektrisch verbundene dritte Anschlußklemme des zweiten Meßumformers und die zweite Einzelader der zweiten Zweidraht-Leitung auch an die zweite Anschlußklemme des zweiten Meßumformers elektrisch angeschlossen sein.

Nach einer fünften Ausgestaltung des Meßgeräte-Systems der Erfindung ist ferner vorgesehen, daß die Schnittstellenschaltung des ersten Meßumformers eingerichtet ist, zur Norm IEC 61784-1 CPF1 konform modulierte Stromsignale zu verarbeiten, beispielsweise nämlich zu senden und/oder zu empfangen.

Nach einer sechsten Ausgestaltung des Meßgeräte-Systems der Erfindung ist ferner vorgesehen, daß die Schnittstellenschaltung des ersten Meßumformers eingerichtet ist, zur Norm IEC 61784-1 CPF3 konform modulierte Stromsignale zu verarbeiten, beispielsweise nämlich zu senden und/oder zu empfangen.

Nach einer siebenten Ausgestaltung des Meßgeräte-Systems der Erfindung ist ferner vorgesehen, daß die Schnittstellenschaltung des ersten Meßumformers eingerichtet ist, zur Norm IEC 61158 konform modulierte Stromsignale zu verarbeiten, beispielsweise nämlich zu senden und/oder zu empfangen.

Nach einer achten Ausgestaltung des Meßgeräte-Systems der Erfindung ist ferner vorgesehen, daß die Schnittstellenschaltung des ersten Meßumformers eingerichtet ist, mittels Frequenzumtastung (FSK - frequency shift keying) modulierte Stromsignale, beispielsweise nämlich zur Norm IEC 61784-1 CPF9 und/oder IEC 61158 konform modulierte Stromsignale, zu verarbeiten, beispielsweise nämlich zu senden und/oder zu empfangen.

Nach einer neunten Ausgestaltung des Meßgeräte-Systems der Erfindung ist ferner vorgesehen, daß die Schnittstellenschaltung des zweiten Meßumformers eingerichtet ist, mittels Frequenzumtastung (FSK - frequency shift keying) modulierte Stromsignale, beispielsweise nämlich zur Norm IEC 61784-1 CPF9 und/oder IEC 61158 konform modulierte Stromsignale, zu verarbeiten, beispielsweise nämlich zu senden und/oder zu empfangen.

Nach einer zehnten Ausgestaltung des Meßgeräte-Systems der Erfindung ist ferner vorgesehen, daß die Funkeinheit des zweiten Meßumformers eingerichtet ist, zu wenigstens einer der Normen: IEEE 802.15.4, beispielsweise nämlich WPAN, WirelessHART oder ZigBee, IEEE 802.11, beispielsweise nämlich WLAN oder WiFi, und IEEE 802.15.1, beispielsweise nämlich Bluetooth, konforme Funksignale zu verarbeiten, beispielsweise nämlich auszusenden und/oder zu empfangen.

Nach einer elften Ausgestaltung des Meßgeräte-Systems der Erfindung ist ferner vorgesehen, daß der erste Meßumformer eingerichtet ist, das Ausgangssignal an die Auswerte- und Versorgungselektronik durch Lastmodulation eines Schleifenstroms, nämlich durch Modulation eines von der Auswerte- und Versorgungselektronik getriebenen elektrischen Stroms in der Stromschleife zu übermitteln, beispielsweise derart, daß der Schleifenstrom in Abhängigkeit von der ersten Meßgröße mittels der Schnittstellenschaltung des ersten Meßumformers auf eine innerhalb eines Bereichs 4 - 20 mA liegende Stromstärke eingestellt wird.

Nach einer zwölften Ausgestaltung des Meßgeräte-Systems der Erfindung ist ferner vorgesehen, daß der zweite Meßumformer eingerichtet ist, einen Wert, beispielsweise einen Momentanwert und/oder einen Effektivwert, einer via Schnittstellenschaltung des zweiten Meßumformers aus der Stromschleife momentan zugeführten elektrischen Leistung und/oder einer Stromstärke eines Eingangsstroms der Schnittstellenschaltung des zweiten Meßumformers zu ermitteln.

Nach einer dreizehnten Ausgestaltung des Meßgeräte-Systems der Erfindung ist ferner vorgesehen, daß die Schnittstellenschaltung des ersten Meßumformer eingerichtet ist, das als Meßsignal dienliche Ausgangssignal als ein, beispielsweise zur DIN IEC 60381-1:1985-11 konformes, Einheitssignal, beispielsweise nämlich als ein Stromsignal, auszugeben. Diese Ausgestaltung des Meßgeräte-Systems der Erfindung weiterbildend ist ferner vorgesehen, daß die Schnittstellenschaltung des ersten Meßumformers eingerichtet ist, deren als Meßsignal dienliches Ausgangssignal als ein Stromsignal, beispielsweise nämlich ein zur DIN IEC 60381-1:1985-11 konformes 4 - 20 mA-Stromsignal, auszugeben, beispielsweise derart, daß das Meßsignal ein lediglich zwei diskrete Werte für die Meßgröße binär, nämlich nominell mit einer Stromstärke des elektrischen Stroms des Ausgangsignal von 4 mA oder 20 mA codierendes Schaltsignal ist.

Nach einer vierzehnten Ausgestaltung des Meßgeräte-Systems der Erfindung ist ferner vorgesehen, daß die Stromschleife zumindest auch die Schnittstellenschaltung des zweiten Meßumformers involviert, beispielsweise derart, daß die Schnittstellenschaltung des ersten Meßumformers und die Schnittstellenschaltung des zweiten Meßumformers elektrisch in Serie geschaltet sind, beispielsweise derart, daß ein von der Auswerte- und Versorgungselektronik getriebenen elektrischen Strom in der Stromschleife sowohl einem Strom des Ausgangssignals der Schnittstellenschaltung des ersten Meßumformers als auch einem Eingangsstrom der Schnittstellenschaltung des zweiten Meßumformers entspricht. Diese Ausgestaltung des Meßgeräte-Systems der Erfindung weiterbildend ist ferner vorgesehen, daß die Schnittstellenschaltung des zweiten Meßumformers eingerichtet ist, gleichzeitig mit der Schnittstellenschaltung des ersten Meßumformers den Strom von deren Ausgangssignal und/oder einen von der Auswerte- und Versorgungselektronik getriebenen elektrischen Strom in der Stromschleife zu führen.

Nach einer fünfzehnten Ausgestaltung des Meßgeräte-Systems der Erfindung ist ferner vorgesehen, daß der zweite Meßumformer eine mit dessen Schnittstellenschaltung elektrisch verbundene, beispielsweise einen oder mehrere wiederaufladbare elektrochemische Speicher und/oder einen oder mehrere Superkondensatoren aufweisende, Speicherschaltung umfaßt, wobei die Speicherschaltung dafür eingerichtet ist, aus der Schnittstellenschaltung des zweiten Meßumformers bezogene elektrische Energie zu speichern und, beispielsweise für die Generierung des zweiten Aufnehmersignals und/oder des Funksignals benötigte, elektrische Energie abzugeben, beispielsweise nämlich falls eine via Schnittstellenschaltung des zweiten Meßumformers aus der Stromschleife momentan zugeführte elektrische Leistung einen momentanen Bedarf des zweiten Meßgeräts an elektrischer Leistung nicht deckt und/oder falls eine Stromstärke eines Eingangsstroms der Schnittstellenschaltung des zweiten Meßumformers einen dafür vorgegebenen Mindestwert nicht erreicht.

Nach einer sechzehnten Ausgestaltung des Meßgeräte-Systems der Erfindung ist ferner vorgesehen, daß der erste Meßumformer der Zündschutzart "Geräteschutz durch Eigensicherheit (Ex-i)" gemäß EN 60079 11 :2012 und/oder der Zündschutzart "Erhöhte Sicherheit (Ex-e)" gemäß EN 60079-7:2007 genügt.

Nach einer siebzehnten Ausgestaltung des Meßgeräte-Systems der Erfindung ist ferner vorgesehen, daß der zweite Meßumformer der Zündschutzart "Geräteschutz durch Eigensicherheit (Ex-i)" gemäß EN 60079-11 :2012 und/oder und/oder der Zündschutzart "Erhöhte Sicherheit (Ex-e)" gemäß EN 60079-7:2007genügt.

Nach einer achtzehnten Ausgestaltung des Meßgeräte-Systems der Erfindung ist ferner vorgesehen, daß das erste Meßgerät ein, beispielsweise druckfestes und/oder explosionssichere und/oder gegen Eindringen von Staub in schädigenden Mengen schützendes und/oder gegen Eindringen von allseitigem Spritzwasser schützendes und/oder zumindest den Anforderungen der Schutzart IP 54 gemäß DIN EN 60529:2014-09 genügendes und/oder den Anforderungen der Zündschutzart "Druckfeste Kapslung (Ex-d)" gemäß EN 60079-1:2007 genügendes und/oder mit dem ersten Meßaufnehmer feste verbundenes, erstes Umformer-Gehäuse aufweist, innerhalb dem der erste Meßumformer zumindest teilweise untergebracht ist.

Nach einer neunzehnten Ausgestaltung des Meßgeräte-Systems der Erfindung ist ferner vorgesehen, daß das zweite Meßgerät ein, beispielsweise druckfestes und/oder explosionssichere und/oder gegen Eindringen von Staub in schädigenden Mengen schützendes und/oder gegen Eindringen von allseitigem Spritzwasser schützendes und/oder zumindest den Anforderungen der Schutzart IP 54 gemäß DIN EN 60529:2014-09 genügendes und/oder den Anforderungen der Zündschutzart "Druckfeste Kapslung (Ex-d)" gemäß EN 60079-1:2007 und/oder vom ersten Umformer-Gehäuse mehr als 1 m (Meter) entfernt angeordnetes und/oder mit dem zweiten Meßaufnehmer feste verbundenes, zweites Umformer-Gehäuse aufweist, innerhalb dem der zweite Meßumformer zumindest teilweise untergebracht ist.

Nach einer zwanzigsten Ausgestaltung des Meßgeräte-Systems der Erfindung ist ferner vorgesehen, daß der zweite Meßumformer eingerichtet ist, eine Eingangsspannung und/oder einen Eingangsstrom der Schnittstellenschaltung des zweiten Meßumformers zu überwachen, beispielsweise via Funkeinheit ein Alarm-Funksignal, nämlich einen Defekt des Meßgeräte-Systems vermeldende Nachrichten kabellos übertragende elektromagnetische Freiraumwellen auszusenden, falls die Eingangsspannung einen dafür vorgegebenen Mindestwert unterschritten hat und/oder falls die Eingangsspannung einen dafür vorgegebenen Höchstwert überschritten hat und/oder falls der Eingangsstrom einen dafür vorgegebenen Mindestwert unterschritten hat und/oder falls der Eingangsstrom einen dafür vorgegebenen Höchstwert überschritten hat.

Nach einer einundzwanzigsten Ausgestaltung des Meßgeräte-Systems der Erfindung ist ferner vorgesehen, daß das erste Meßgerät eingerichtet ist, zeitweise in einem ersten Betriebsmodus zu operieren, in dem der erste Meßumformer das Meßsignal mit einem, beispielsweise die erste Meßgröße repräsentierenden, Signalpegel, beispielsweise nämlich eine Stromstärke eines elektrischen Stroms in der Stromschleife, liefert, der größer als ein dafür vorgegebener Mindestwert ist, beispielsweise derart, daß die von der Auswerte- und Versorgungselektronik in die Stromschleife eingespeiste elektrische Leistung mehr als 100 mW beträgt und/oder daß eine Stromstärke eines elektrischen Stroms in der Stromschleife 20 mA beträgt, und daß das zweite Meßgerät eingerichtet ist, zeitweise in einem ersten Betriebsmodus zu operieren, in dem der zweite Meßaufnehmer das zweite Aufnehmersignal bereitstellt und in dem der zweite Meßumformer nämliches zweites Aufnehmersignal empfängt und zumindest in das Funksignal wandelt, wobei das zweite Meßgerät ferner eingerichtet ist, beispielsweise lediglich, dann im ersten Betriebsmodus zu operieren, wenn das erste Meßgerät in dessen ersten Betriebsmodus operiert, und/oder im zweiten Betriebsmodus zu operieren während das erste Meßgerät in dessen zweiten Betriebsmodus operiert.

Nach einer zweiundzwanzigsten Ausgestaltung des Meßgeräte-Systems der Erfindung ist ferner vorgesehen, daß das zweite Meßgerät eingerichtet ist, zeitweise in einem ersten Betriebsmodus zu operieren, in dem der zweite Meßaufnehmer das zweite Aufnehmersignal bereitstellt und in dem der zweite Meßumformer nämliches zweites Aufnehmersignal empfängt und zumindest in das Funksignal wandelt. Diese Ausgestaltung des Meßgeräte-Systems der Erfindung weiterbildend ist ferner vorgesehen, daß das zweite Meßgerät eingerichtet ist, zeitweise nicht im ersten Betriebsmodus und währenddessen zumindest zeitweise in einem zweiten Betriebsmodus zu operieren, in dem der zweite Meßaufnehmer das zweite Aufnehmersignal nicht bereitstellt und/oder in dem der zweite Meßumformer das zweite Aufnehmersignal nicht in das Funksignal wandelt, und/oder daß der zweite Meßumformer eingerichtet ist, im zweiten Betriebsmodus des zweiten Meßgeräts das Ausgangssignal der Schnittstellenschaltung des ersten Meßumformers in ein Ersatz-Funksignal, nämlich via Funkeinheit ausgesendete, eine Folge von die erste Meßgröße quantisierenden Meßwerten kabellos übertragende elektromagnetische Freiraumwellen zu wandeln, beispielsweise auch derart, daß die Funkeinheit des zweiten Meßumformers das Ersatz-Funksignal mit einer anpassbaren und/oder weniger als 100mW betragenden und/oder im Vergleich zu einer Strahlungsleistung mit der das Funksignal ausgesendet wird verminderten Strahlungsleistung aussendet. Alternativ oder in Ergänzung kann das zweite Meßgerät bzw. dessen Meßumformer ferner eingerichtet sein, in Abhängigkeit von der zweiten Meßgröße und/oder von wenigstens einem vom zweiten Meßumformer, beispielsweise anhand des zweiten Aufnehmersignals und/oder anhand eines Eingangsstroms der Schnittstellenschaltung des zweiten Meßumformers, ermittelten eine via Schnittstellenschaltung beziehbare elektrische Leistung repräsentierenden Betriebsparameter, beispielsweise einer Stromstärke eines Eingangsstroms der Schnittstellenschaltung des zweiten Meßumformers oder einem davon abgeleiteten Parameterwert, selbsttätig den ersten Betriebsmodus zu deaktivieren und/oder den zweiten Betriebsmodus zu aktivieren, beispielsweise nämlich falls mittels des zweiten Meßumformers festgestellt ist, daß eine via Schnittstellenschaltung des zweiten Meßumformers aus der Stromschleife momentan zugeführte elektrische Leistung einen Bedarf des im ersten Betriebsmodus operierenden zweiten Meßgeräts an elektrischer Leistung nicht deckt und/oder daß eine Stromstärke eines elektrischen Stroms in der Stromschleife einen dafür vorgegebenen Mindestwert nicht erreicht, und/oder kann das zweite Meßgerät bzw. dessen Meßumformer eingerichtet sein, in Abhängigkeit von dem wenigstens einen Betriebsparameter selbsttätig den zweiten Betriebsmodus zu deaktivieren und/oder den ersten Betriebsmodus zu aktivieren, beispielsweise nämlich falls mittels des zweiten Meßumformers festgestellt ist, daß eine via Schnittstellenschaltung des zweiten Meßumformers aus der Stromschleife momentan zugeführte elektrische Leistung den Bedarf des im ersten Betriebsmodus operierenden zweiten Meßgeräts an elektrischer Leistung zu decken vermag und/oder daß eine Stromstärke eines Eingangsstroms der Schnittstellenschaltung des zweiten Meßumformers einen dafür vorgegebenen Mindestwert erreicht oder überschritten hat.

Nach einer dreiundzwanzigsten Ausgestaltung des Meßgeräte-Systems der Erfindung ist ferner vorgesehen, daß das erste Meßgerät eingerichtet ist, zeitweise in einem ersten Betriebsmodus zu operieren, in dem der erste Meßumformer das Meßsignal mit einem, beispielsweise die erste Meßgröße repräsentierenden, Signalpegel, beispielsweise nämlich eine Stromstärke eines elektrischen Stroms in der Stromschleife, liefert, der größer als ein dafür vorgegebener Mindestwert ist, beispielsweise derart, daß die von der Auswerte- und Versorgungselektronik in die Stromschleife eingespeiste elektrische Leistung mehr als 100 mW beträgt und/oder daß eine Stromstärke eines elektrischen Stroms in der Stromschleife 20 mA beträgt. Diese Ausgestaltung des Meßgeräte-Systems der Erfindung weiterbildend ist ferner vorgesehen, daß das erste Meßgerät eingerichtet ist, zeitweise nicht im ersten Betriebsmodus und währenddessen zumindest zeitweise in einem zweiten Betriebsmodus zu operieren, in dem der erste Meßumformer das Meßsignal mit einem, beispielsweise die erste Meßgröße repräsentierenden, Signalpegel, beispielsweise nämlich eine Stromstärke eines elektrischen Stroms in der Stromschleife, liefert, der kleiner als der Mindestwert ist, beispielsweise derart, daß die von der Auswerte- und Versorgungselektronik in die Stromschleife eingespeiste elektrische Leistung weniger als 100 mW beträgt und/oder daß eine Stromstärke eines elektrischen Stroms in der Stromschleife 4 mA beträgt..

Nach einer vierundzwanzigsten Ausgestaltung des Meßgeräte-Systems der Erfindung ist ferner vorgesehen, daß die Auswerte- und Versorgungselektronik eingerichtet ist, das Funksignal des zweiten Meßgeräts zu verarbeiten, insb. nämlich zu empfangen und auszuwerten, insb. nämlich unter Verwendung Funksignals die zweite Meßgröße repräsentierende, ggf. auch digitale, Meßwerte zu ermitteln bzw. aus dem Funksignal zu gewinnen.

Nach einer ersten Ausgestaltung der Meßanordnung der Erfindung ist ferner vorgesehen, daß der erste Meßaufnehmer mehr als 1 m (Meter) vom zweiten Meßaufnehmer entfernt angeordnet ist.

Nach einer zweiten Ausgestaltung der Meßanordnung der Erfindung ist ferner vorgesehen, daß der erste Meßumformer mehr als 1 m vom zweiten Meßumformer entfernt angeordnet ist.

Nach einer dritten Ausgestaltung der Meßanordnung der Erfindung ist ferner vorgesehen, daß der erste Meßumformer mehr als 1 m von der Auswerte- und Versorgungselektronik entfernt angeordnet ist.

Nach einer vierten Ausgestaltung der Meßanordnung der Erfindung ist ferner vorgesehen, daß der zweite Meßumformer mehr als 1 m von der Auswerte- und Versorgungselektronik entfernt angeordnet ist.

Nach einer fünften Ausgestaltung der Meßanordnung der Erfindung ist ferner vorgesehen, daß der erste Meßumformer weniger als 1 m vom ersten Meßaufnehmer entfernt angeordnet ist.

Nach einer sechsten Ausgestaltung der Meßanordnung der Erfindung ist ferner vorgesehen, daß der zweite Meßumformer weniger als 1 m vom zweiten Meßaufnehmer entfernt angeordnet ist.

Ein Grundgedanke der Erfindung besteht darin ein (hybrides) Meßgeräte-System bereitzustellen, bei dem zum einen die Meßgeräte gemeinsam über eine konventionelle Stromschleife mit elektrischer Energie versorgt sind und bei dem zum anderen jedes der Meßgeräte zumindest innerhalb eines vorab spezifizierten (normalen) Betriebs- bzw. Meßbereichs gleichmäßig und in sowohl für schnelle und präzise Messungen als auch die rasche Übermittlung des jeweiligen Meßergebnisses stets ausreichendem Maße elektrische Leistung beziehen kann. Vorteilhaft kann durch das erfindunggemäße Meßgeräte-System auch der Umstand ausgenutzt werden, daß außerhalb des vorbezeichneten Betriebsbereichs eigentlich auch keine detaillierte Messung, sondern ledig eine geeignete Signalisierung des Alarmzustandes erforderlich ist. Nämliche Signalisierung des Alarmzustandes wiederum ist ohne weiteres auch mit der dann nur geringen verfüglichen elektrischer Leistung zu bewerkstelligen. Ein weiterer Vorteil der Erfindung ist u.a. darin zusehen, daß zum einen der Aufwand hinsichtlich des elektrischen Anschlusses der Meßgeräte an die jeweilige Auswerte- und Versorgungselektronik im Vergleich zu mit herkömmlichen hybriden Meßgeräten gebildeten Meßgeräte-Systemen bzw. Meßanordnung geringer ist. Zum anderen können die eine oder mehrere Meßgrößen dennoch mit einer hohen Aktualisierungsrate sehr präzise erfaßt und daraus abgeleitete Meßwerte per Funk mit einer hohen Senderate und hohen Sendereichweite zu gesendet werden; dies ggf. auch für den Fall, daß jedes der Meßgeräte der Zündschutzart "Geräteschutz durch Eigensicherheit (Ex-i)" gemäß EN 60079 11:2012 genügt, mithin intern auch nur geringe Energiemengen gespeichert werden dürfen. Ein weiterer Vorteil der Erfindung ist auch darin zu sehen, daß das Meßgeräte-System bzw. die entsprechende Meßanordnung jeweils auch mittels hinsichtlich der Hardware konventioneller Meßgeräte, nicht zuletzt auch mittels herkömmlicher programmierbarer Zweileiter-Feldgeräte und/oder mittels herkömmlicher hybrider Feldgeräte, wie auch mittels herkömmlicher Auswerte- und Versorgungselektroniken realisiert werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fign. 1, 2 und 3: schematisiert jeweils ein Meßgeräte-System bzw. eine damit gebildete Meßanordnung aus dem Stand der Technik;
- Fig. 4: schematisiert ein Ausführungsbeispiel eines erfindungsgemäßen Meßgeräte-Systems bzw. einer damit gebildeten Meßanordnung;
- Fig. 5: schematisiert ein weiteres Ausführungsbeispiel eines erfindungsgemäßen Meßgeräte-Systems bzw. einer damit gebildeten Meßanordnung; und
- Fig. 6, 7: schematisiert Ausführungsbeispiele für für ein erfindungsgemäßes Meßgeräte-System geeignete Meßumformer;

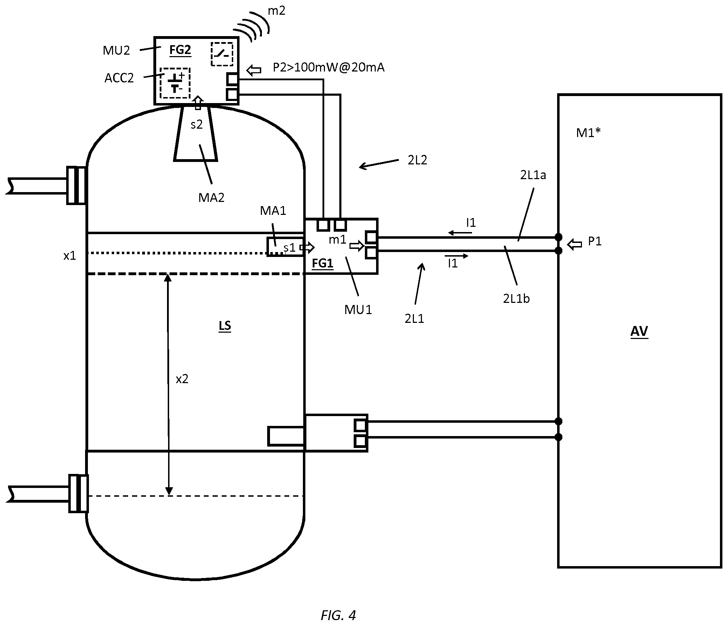

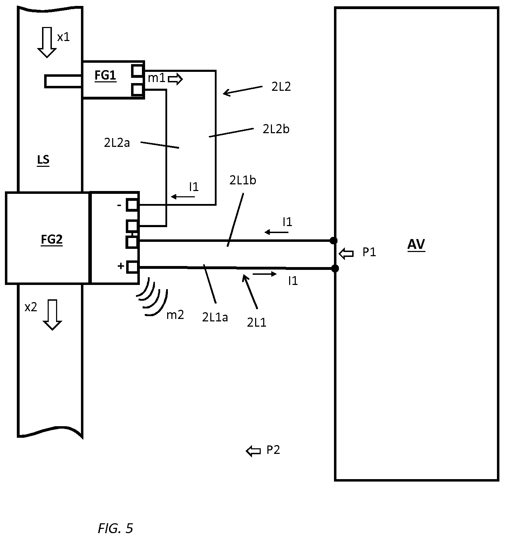

In Fig. 4 und 5 sind jeweils schematisch Ausführungsbeispiele für ein mittels eines ersten Meßgeräts FG1, eines zweiten Meßgeräts FG2 sowie einer Auswerte- und Versorgungselektronik AV gebildeten erfindungsgemäßen Meßgeräte-Systems gezeigt. Mittels des Meßgeräte-Systems kann, wie auch in Fig. 4 und 5 jeweils gezeigt, ferner eine Meßanordnung gebildet sein, die neben den Meßgeräten FG1, FG2 und der Auswerte- und Versorgungselektronik AV ein dem Führen eines strömungsfähiges Medium dienliches Leitungssystem umfaßt. Nämliches Leitungssystem LS kann, wie in Fig. 4 angedeutet, beispielsweise mittels eines Vorratsbehälters, nämlich beispielsweise einem Tank, einem Silo oder einem Becken, und/oder, wie auch in Fig. 5 gezeigt, beispielsweise mittels eines Transportkanals, beispielsweise nämlich einer Rohrleitung oder einem Gerinne, gebildet sein.

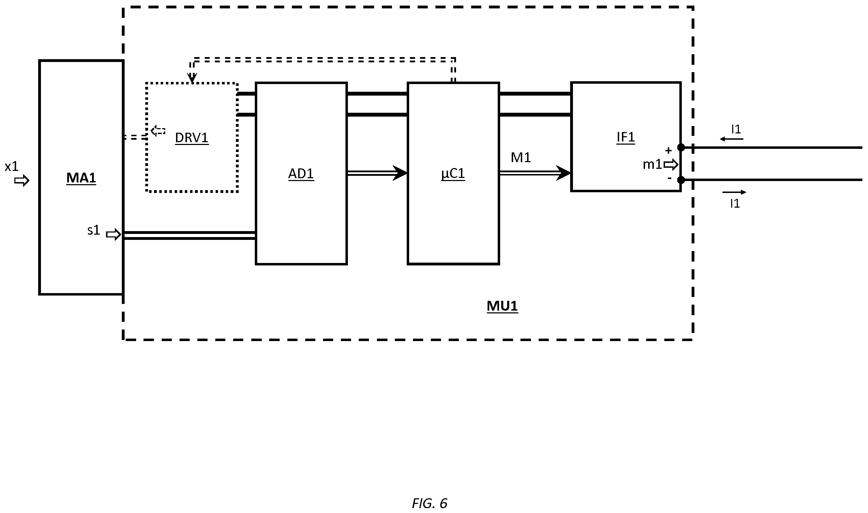

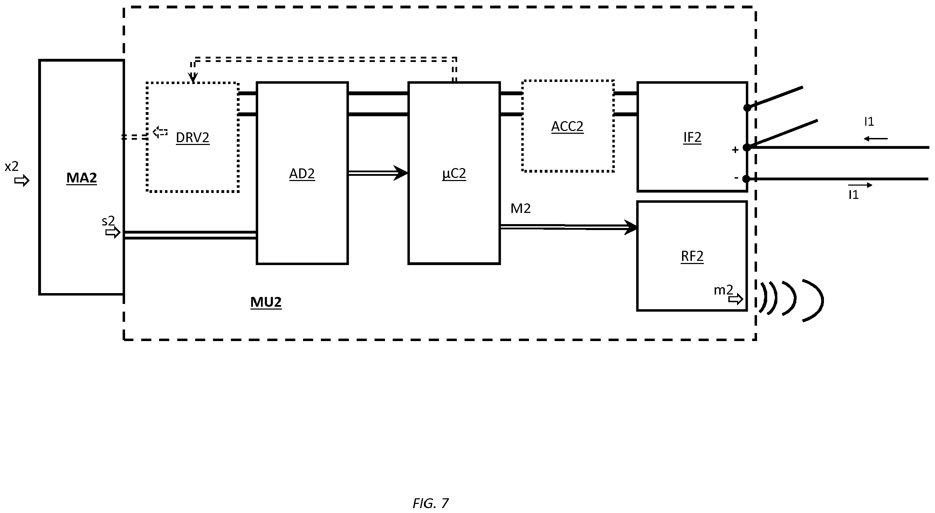

Das Meßgerät FG1 weist einen ersten Meßgrößen-Aufnehmer MA1 und einem mit nämlichem Meßgrößen-Aufnehmer MA1 elektrisch verbundenen, beispielsweise - wie auch in Fig. 6 schematisch dargestellt - mittels wenigstens eines Analog-zu-Digital-Wandler AD1 und/oder mittels wenigstens eines Mikroprozessors µC1 gebildeten, ersten Meßumformer MU1 auf und das Meßgerät FG2 weist einen zweiten Meßgrößen-Aufnehmer MA2 und einem mit nämlichem Meßgrößen-Aufnehmer MA2 elektrisch verbundenen, beispielsweise - wie auch in Fig. 7 schematisch dargestellt - mittels wenigstens eines Analog-zu-Digital-Wandler AD2 und/oder mittels wenigstens eines Mikroprozessors µC2 gebildeten, zweiten Meßumformer MU2 auf. Der Meßgrößen-Aufnehmer MA1 ist eingerichtet, auf eine erste Meßgröße x1 anzusprechen und ein, insb. elektrisches, erstes Aufnehmersignal s1 bereitzustellen, derart, daß nämliches Aufnehmersignal s1 einer Änderung der Meßgröße x1 mit einer Änderung wenigstens eines Signalparameters, beispielsweise einer Signalamplitude und/oder einer Signalfrequenz, folgt, während der Meßgrößen-Aufnehmer MA2 eingerichtet ist, auf eine zweite Meßgröße x2 anzusprechen und ein, insb. elektrisches, zweites Aufnehmersignal s1 bereitzustellen, derart, daß nämliches Aufnehmersignal s2 einer Änderung der Meßgröße x2 mit einer Änderung wenigstens eines Signalparameters, beispielsweise einer Signalamplitude und/oder einer Signalfrequenz, folgt. Wie in Fig. 4 und 5 jeweils angedeutet können der Meßaufnehmer MA1 und der Meßaufnehmer MA2 gemeinsam, ggf. auch voneinander beabstandet, in das selbe Leitungssystem eingesetzt sein, beispielsweise auch derart, daß der Meßaufnehmer MA1 mehr als 1 m (Meter) vom Meßaufnehmer MA2 entfernt angeordnet ist und/oder daß der Meßumformer MU1 mehr als 1 m vom Meßumformer MU2 entfernt angeordnet ist und/oder das der Meßumformer MU1 mehr als 1 m von der Auswerte- und Versorgungselektronik AV entfernt angeordnet ist und/oder daß der Meßumformer MU2 mehr als 1 m von der Auswerte- und Versorgungselektronik AV entfernt angeordnet ist und/oder daß der Meßumformer MU1 weniger als 1 m vom Meßwandler MA1 entfernt angeordnet ist und/oder daß der Meßumformer MU2 weniger als 1 m vom Meßwandler MA2 entfernt angeordnet ist.

Bei dem Meßaufnehmer MA1 kann es sich um einen aktiven, nämlich ohne Hilfsenergie operierenden Aufnehmer oder beispielsweise auch um einen passiven, nämlich mit von einer entsprechenden Treiberschaltung DRV1 gelieferter Hilfsenergie operierenden Aufnehmer handeln; gleichermaßen kann auch der Meßaufnehmer MA2 als ein aktiver Aufnehmer oder als ein eine von einer entsprechenden Treiberschaltung DRV2 bereitgestellten Hilfsenergie benötigender passiver Aufnehmer ausgebildet sein. Sowohl das Meßgerät FG1 als auch das Meßgerät FG2 kann ferner jeweils ein erstes bzw. zweites, beispielsweise auch mit dem jeweils zugehörigen Meßaufnehmer fest verbundenes, Umformer-Gehäuse aufweisen, innerhalb dem der zugehörige Meßumformer MU1 bzw. MU2 zumindest teilweise, beispielsweise auch vollständig, untergebracht ist. Jedes der vorbezeichneten Umformer-Gehäuse kann zudem, wie bei Meßgeräten der in Rede stehenden Art durchaus üblich, beispielsweise auch als druckfestes und/oder explosionssicheres und/oder gegen Eindringen von Staub in schädigenden Mengen schützendes und/oder gegen Eindringen von allseitigem Spritzwasser schützendes und/oder zumindest den Anforderungen der Schutzart IP 54 gemäß DIN EN 60529:2014-09 und/oder der Zündschutzart "Druckfeste Kapslung (Ex-d)" gemäß EN 60079-1:2007 genügendes, Umformer-Gehäuse ausgebildet sein. Alternativ oder in Ergänzung können der Meßumformer MU1 und/oder der Meßumformer MU2 jeweils auch der Zündschutzart "Geräteschutz durch Eigensicherheit (Ex-i)" gemäß EN 60079 11:2012 und/oder der Zündschutzart "Erhöhte Sicherheit (Ex-e)" gemäß EN 60079-7:2007 genügen und/oder den jeweils zugehörigen Meßaufnehmer MA1 bzw. MA2 zumindest teilweise einfassen.

Bei der mittels des erfindungsgemäßen Meßgeräte-Systems zu erfassenden Meßgröße x1 und/oder Meßgröße x2 kann es sich jeweils beispielsweise um einen ein im vorbezeichneten Leitungssystem LS geführtes Medium, beispielsweise ein Gas, eine Flüssigkeit oder ein Dispersion, charakterisierenden Stoffparameter, wie etwa ein pH-Wert, ein Sauerstoff-Gehalt, eine elektrische Leitfähigkeit, eine Dichte oder eine Viskosität, oder auch um einen mit einem in vorbezeichnetem Leitungssystem geführten Medium assoziierten Prozeßparameter, wie etwa eine Temperatur, ein Druck, oder - wie in Fig. 4 bzw. auch in Fig. 5 angedeutet - beispielsweise einen Füllstand (Fig. 4) bzw. einen Volumen- oder Massenstrom (Fig. 5), handeln. Dementsprechend kann das Meßgerät FG1 bzw. FG2 jeweils beispielsweise als ein, insb. Radar basiertes, Füllstandsmeßgerät oder auch ein, insb. vibronisches, thermisches, magnetisch-induktives oder akustisches, Durchflußmeßgerät ausgebildet sein. Nach einer Ausgestaltung des Meßgeräte-Systems der Erfindung handelt es sich bei der Meßröße x1 um ein, beispielsweise einem Pumpenschutz, einer Überfüllsicherung oder einer Leckageüberwachung dienliches, Vergleichsergebnis mit einem entsprechend vorgegebenen Grenz- oder Schwellenwert, mithin um eine lediglich zwei alternierende Werte bzw. Zustände, beispielsweise nämlich "Grenzwert erreicht" oder "Grenzwert nicht erreicht", annehmende boolsche Variable. Bei der Meßgröße x1 kann es sich dementsprechend, wie in Fig. 4 angedeutet, um einen Grenzfüllstand oder, wie in Fig. 5 angedeutet, um einen Durchflußgrenzwert handeln. Desweiteren kann die Meßgröße x2 zudem auch einen die jeweilige Meßgröße x1 enthaltenden Wertebereich aufweisen bzw. kann die Meßgröße x1 auch ein Vergleichsergebnis mit einem für die jeweilige Meßgröße x2 vorgegebenen Grenz- oder Schwellenwert sein. Dementsprechend kann das Meßgerät FG1 - wie in Fig. 4 schematisiert dargestellt - auch als ein Schaltgerät, beispielsweise nämlich als ein vibronischer oder kapazitiver Füllstandgrenzschalter, als ein Druckschalter oder - wie in Fig. 5 schematisiert dargestellt - als ein thermischer, vibronischer oder magnetisch-induktiver Durchflußschalter ausgebildet sein.

Der - beispielsweise programmierbare - Meßumformer MU1 weist, wie in Fig. 6 schematisch dargestellt, eine, beispielsweise als Schaltausgang und/oder TTY-Schnittstelle ausgebildete, Schnittstellenschaltung IF1 sowohl zur leitungsgebundenen Energiespeisung als auch zur leitungsgebundenen Signalübertragung auf und ist zudem eingerichtet, das Aufnehmersignal s1 zu empfangen und in ein Meßsignal m1, nämlich ein die Meßgröße x1 repräsentierendes elektrisches Ausgangssignal der Schnittstellenschaltung zu wandeln. Nicht zuletzt für den vorbezeichneten Fall, daß die Meßgröße x1 einer boolschen Variable entspricht, kann das als Meßsignal m1 dienliche Ausgangssignal als ein binärcodiertes Schaltsignal ausgebildet sein. Die Schnittstellenschaltung IF1 des Meßumformers MU1 ist, wie in Fig. 4, 5 und 6 jeweils gezeigt bzw. wie aus deren Zusammenschau ohne weiteres ersichtlich, unter Bildung einer sowohl nämliche Schnittstellenschaltung als auch die Auswerte- und Versorgungselektronik involvierenden Stromschleife 2L zudem an die Auswerte- und Versorgungselektronik AV elektrisch angeschlossen. Die Auswerte- und Versorgungselektronik AV wiederum ist im besonderen eingerichtet, elektrische Leistung P1, beispielsweise mit einer elektrischen Spannung von mehr als 12 V (Volt) und/oder weniger als 45 V, in nämliche Stromschleife 2L einzuspeisen. Darüberhinaus ist der Meßumformer MU1 ferner dafür eingerichtet, mittels der Schnittstellenschaltung IF1 sowohl elektrische Leistung aus nämlicher Stromschleife 2L zu beziehen als auch das Meßsignal m1 an die Auswerte- und Versorgungselektronik zu senden, beispielsweise durch Modulation eines Schleifenstroms 11, nämlich eines von der Auswerte- und Versorgungselektronik AV getriebenen elektrischen Stroms in der Stromschleife 2L. Dementsprechend ist die Schnittstellenschaltung IF1 des Meßumformers MU1 nach einer weiteren Ausgestaltung des Meßgeräte-Systems der Erfindung eingerichtet, das als Meßsignal m1 dienliche Ausgangssignal in Form eines, beispielsweise auch zur DIN IEC 60381-1:1985-11 konformes, Einheitssignals auszugeben. Als Einheitssignal kann beispielsweise ein 4 - 20 mA-Stromsignal, nämlich ein mittels der Schnittstellenschaltung IF1 in Abhängigkeit von der Meßgröße x1 auf eine innerhalb eines Bereichs 4 - 20 mA liegende Stromstärke eingestellter Schleifenstrom I1 dienen. Für den vorbezeichneten Fall, daß das Meßsignal m1 als ein Schaltsignal ausgebildet ist, können die dann lediglich zwei diskreten Werte für die Meßgröße x1 beispielsweise auch mit einer Stromstärke des elektrischen Stroms I1 von nominell 4 mA oder 20 mA entsprechend binär codiert werden. Nach einer weiteren Ausgestaltung des Meßgeräte-Systems der Erfindung ist die Schnittstellenschaltung IF1 des Meßumformers MU1 eingerichtet, zu wenigstens einer der Normen IEC 61784-1 CPF1 (FOUNDATION Fieldbus), IEC 61784-1 CPF3 (PROFIBUS, PROFINET), IEC 61784 1 CPF9 (HART) bzw. IEC 61158 konform modulierte, beispielsweise auch mittels Frequenzumtastung (FSK - frequency shift keying) modulierte, Stromsignale zu verarbeiten, insb. nämlich zu senden und/oder zu empfangen.

Alternativ oder in Ergänzung kann auch die Schnittstellschaltung IF2 sein, mittels Frequenzumtastung (FSK - frequency shift keying) modulierte Stromsignale, beispielsweise nämlich auch zur Norm IEC 61784-1 CPF9 und/oder IEC 61158 konform modulierte Stromsignale, zu verarbeiten. Nach einer weiteren Ausgestaltung des Meßgeräte-Systems der Erfindung ist das Meßgerät FG1 ferner eingerichtet, zeitweise in einem ersten Betriebsmodus zu operieren, in dem der Meßumformer MU1 das Meßsignal m1 mit einem, insb. die Meßgröße x1 repräsentierenden, Signalpegel, beispielsweise nämlich eine Stromstärke des Schleifenstroms 11, liefert, der größer als ein dafür vorgegebener Mindestwert ist, beispielsweise nämlich derart, daß eine Stromstärke des Schleifenstroms I1 mehr als 10 mA, beispielsweise nämlich 20 mA, und/oder daß die von der Auswerte- und Versorgungselektronik AV in die Stromschleife eingespeiste elektrische Leistung P1 mehr als 100 mW, beispielsweise nämlich mehr als 200 mW (P1 ≥ 20 mA · 12 V), beträgt. Insbesondere ist das Meßgerät FG1 zudem auch eingerichtet, zeitweise nicht im vorbezeichneten ersten Betriebsmodus und währenddessen zumindest zeitweise in einem zweiten Betriebsmodus zu operieren, nämlich in einem Betriebsmodus in dem der Meßumformer MU1 das Meßsignal mit einem, insb. die Meßgröße x1 repräsentierenden, Signalpegel, beispielsweise also einer Stromstärke des Schleifenstroms 11, liefert, der unterhalb des vorbezeichneten Mindestwerts liegt, beispielsweise nämlich derart, daß eine Stromstärke des Schleifenstroms I1 weniger als 10 mA, beispielsweise nämlich 4mA, und/oder daß die von der Auswerte- und Versorgungselektronik AV in die Stromschleife eingespeiste elektrische Leistung P1 weniger als 100 mW, beispielsweise nämlich weniger als 50 mW (P1 ≤ 4 mA · 12 V), beträgt. Für den vorbezeichneten Fall, daß das Meßgerät FG1 als Schaltgerät bzw. das Meßsignal m1 als ein Schaltsignal ausgebildet ist, kann der erste Betriebsmodus beispielsweise einer Stromstärke des elektrischen Schleifenstroms I1 von nominell 20 mA entsprechen und/oder kann der zweite Betriebsmodus einer Stromstärke des elektrischen Schleifenstroms I1 von nominell 4 mA entsprechen.

Wie u.a. in Fig. 7 schematisch dargestellt, weist der - beispielsweise programmierbare - Meßumformer MU2 des Meßgeräts FG2 ebenfalls eine, beispielsweise als TTY-Schnittstelle ausgebildete, Schnittstellenschaltung IF2 auf. Die Schnittstellenschaltung IF2 des Meßumformers MU2 ist, wie auch in Fig. 4, 5 und 7 jeweils gezeigt bzw. wie aus deren Zusammenschau ohne weiteres ersichtlich, desweiteren an den Meßumformer MU1, beispielsweise nämlich dessen Schnittstellenschaltung IF1 und/oder die damit gebildete Stromschleife 2L, elektrisch angeschlossen. Zudem ist der Meßumformer MU2 bzw. dessen Schnittstellenschaltung IF2 ebenfalls eingerichtet, elektrische Leistung P2 aus der vorbezeichneten Stromschleife 2L zu beziehen.

Nach einer weiteren Ausgestaltung des Meßgeräte-Systems der Erfindung ist die Schnittstellenschaltung IF2 des Meßumformers MU2 eingerichtet, gleichzeitig mit der Schnittstellenschaltung IF1 des Meßumformers MU1 den Strom von deren Ausgangssignal bzw. den von der Auswerte- und Versorgungselektronik AV getriebenen Schleifenstrom I1 zu führen. Im besonderen ist ferner vorgesehen, daß die Stromschleife 2L zumindest auch die Schnittstellenschaltung IF2 des Meßumformers MU2 involviert, beispielsweise auch derart, daß die Schnittstellenschaltung IF1 und die Schnittstellenschaltung IF2 elektrisch in Serie geschaltet sind bzw. daß der vorbezeichnete Schleifenstrom IF1 - wie auch in Fig. 5 angedeutet bzw. aus einer Zusammenschau der Fig. 6 und 7 ersichtlich - sowohl einem Eingangsstrom der Schnittstellenschaltung IF1 (bzw. dem Strom des Ausgangssignals der Schnittstellenschaltung IF1 als auch einem Eingangsstrom der Schnittstellenschaltung IF2 entspricht. Nach einer weiteren Ausgestaltung ist die Schnittstellenschaltung IF2 darüberhinaus auch dafür eingerichtet, den vorbezeichneten Eingangsstrom bzw. den Schleifenstrom I1 zu erfassen, beispielsweise auch um den Meßaufnehmer MA2 in Abhängigkeit von einer momentanen Stromstärke des vorbezeichneten Schleifenstroms I1 zu steuern. Alternativ oder in Ergänzung kann der Meßumformer MU2 zudem auch eingerichtet sein, einen Wert, beispielsweise nämlich einen Momentanwert und/oder einen Effektivwert, einer via Schnittstellenschaltung IF2 aus der Stromschleife 2L momentan zugeführten elektrischen Leistung und/oder einer Stromstärke eines Eingangsstroms der Schnittstellenschaltung IF2 und/oder einer Eingangsspannung der Schnittstellenschaltung IF2 zu ermitteln bzw. die vorbezeichnete elektrischen Leistung, Stromstärke und/oder Eingangsspannung zu überwachen, beispielsweise auf die Einhaltung von dafür entsprechend vorgegebenen Mindest- und/oder Höchstwerten. Nach einer weiteren Ausgestaltung des Meßgeräte-Systems der Erfindung weist der Meßumformer MU2 eine mit dessen Schnittstellenschaltung elektrisch verbundene Speicherschaltung ACC2 auf. Die Speicherschaltung ACC2 kann beispielsweise einen oder mehrere wiederaufladbare elektrochemische Speicher und/oder einen oder mehrere Superkondensatoren aufweisen und ist im besonderen dafür vorgesehen, aus der Schnittstellenschaltung IF2 bezogene elektrische Energie zu speichern und, beispielsweise für die Generierung des Aufnehmersignals s2 und/oder andere Funktionen des Meßumformers MU2 benötigte, elektrische Energie abzugeben, beispielsweise nämlich für den Fall, daß eine via Schnittstellenschaltung IF2 aus der Stromschleife 2L momentan zugeführte elektrische Leistung P2 einen momentanen Bedarf des Meßgeräts FG2 an elektrischer Leistung nicht deckt und/oder falls, wie bereits angedeutet, eine Stromstärke eines Eingangsstroms der Schnittstellenschaltung IF2 einen dafür vorgegebenen Mindestwert nicht erreicht. Selbstverständlich kann, falls erforderlich, auch im Meßumformer MU1 eine derartige Speicherschaltung vorgesehen sein.

Nach einer weiteren Ausgestaltung des Meßgeräte-Systems der Erfindung ist ferner vorgesehen, daß die Stromschleife 2L wenigstens eine aus zwei, beispielsweise auch miteinander verdrillten, Einzeladern gebildete erste Zweidraht-Leitung 2L1 aufweist, und daß sowohl eine erste Einzelader 2L1a der Zweidraht-Leitung 2L1 als auch eine zweite Einzelader 2L1b nämlicher Zweidraht-Leitung 2L1 an die Auswerte- und Versorgungselektronik AV elektrisch angeschlossen ist, beispielsweise auch derart, daß die Einzelader 2L1a eine Hinleitung der Stromschleife und/oder daß die Einzelader 2L1b eine Rückleitung der Stromschleife 2L1 bildet bzw. daß umgekehrt die Einzelader 2L1b eine Hinleitung der Stromschleife und die Einzelader 2L1a eine Rückleitung der Stromschleife 2L1 bildet. Zumindest die Einzelader 2L1a kann, wie in Fig. 5 angedeutet, auch direkt an den Meßumformer MU2, beispielsweise nämlich an eine mit der Schnittstellenschaltung IF2 des Meßumformers MU2 elektrisch verbundene erste Anschlußklemme (+) des Meßumformers MU2, elektrisch angeschlossen sein. Zudem kann auch die Einzelader 2L1b Leitung zum Meßumformer MU2 geführt, gleichwohl nicht mit dessen Schnittstellenschaltung elektrisch verbunden sein, beispielsweise nämlich an eine mit der Schnittstellenschaltung IF2 des Meßumformers MU2 elektrisch nicht verbundene zweite Anschlußklemme des Meßumformers MU2 elektrisch angeschlossen sein. Die Einzelader 2L1a kann aber auch, wie auch in Fig. 4 dargestellt, direkt an den Meßumformer MU1 geführt sein, beispielsweise nämlich an eine mit der Schnittstellenschaltung IF1 des Meßumformers MU1 elektrisch verbundene erste Anschlußklemme des Meßumformers MU1 elektrisch angeschlossen sein. Zudem kann auch die Einzelader 2L1b direkt zum Meßumformer MU1 geführt sein, beispielsweise auch derart, daß nämliche Einzelader 2L1b an eine, ggf. nicht mit der Schnittstellenschaltung IF1 des Meßumformers MU1 elektrisch verbundene, zweite Anschlußklemme des Meßumformers MU1 elektrisch angeschlossen ist. Nach einer weiteren Ausgestaltung des Meßgeräte-Systems der Erfindung weist die Stromschleife 2L ferner wenigstens eine aus zwei, beispielsweise miteinander verdrillten, Einzeladern gebildete zweite Zweidraht-Leitung 2L2 auf. Wie in Fig. 4 und 5 jeweils angedeutet, kann sowohl eine erste Einzelader 2L2a der Zweidraht-Leitung 2L2 als auch eine zweite Einzelader 2L2b nämlicher Zweidraht-Leitung 2L2 an den Meßumformer MU1 elektrisch angeschlossen sein, beispielsweise, derart, daß die Einzelader 2L2a an eine mit der Schnittstellenschaltung IF1 des Meßumformers MU1 elektrisch verbundene erste Anschlußklemme des Meßumformers MU1 elektrisch angeschlossen ist und daß die Einzelader 2L2b an eine mit der Schnittstellenschaltung IF1 des Meßumformers MU1 elektrisch verbundene zweite Anschlußklemme des Meßumformers MU1 elektrisch angeschlossen ist. Darüberhinaus kann die Einzelader 2L2a zudem auch an eine mit der Schnittstellenschaltung IF2 des Meßumformers MU2 elektrisch verbundene dritte Anschlußklemme des zweiten Meßumformers und die Einzelader 2L2b auch an die vorbezeichnete zweite Anschlußklemme des Meßumformers MU2 elektrisch angeschlossen sein, mithin kann vorgesehen sein, daß die Zweidraht-Leitung 2L2, wie auch aus Fig. 4 und 5 jeweils ohne weiteres ersichtlich, nicht an die Auswerte- und Versorgungselektronik AV geführt ist, sondern lediglich den Meßumformer MU1 und den Meßumformer MU2 elektrisch miteinander verbindet. Nach einer weiteren Ausgestaltung des Meßgeräte-Systems der Erfindung ist das Meßgerät FG1 als ein Zweileiter-Feldgerät ausgebildet, nämlich derart, daß - wie auch in Fign. 4 und 5 jeweils angedeutet - dessen Meßumformer MU1 im Betrieb des Meßgeräts FG1 leitungsgebunden lediglich über die Stromschleife 2L mit elektrischer Energie versorgt ist und auch lediglich über nämliche Stromschleife 2L leitungsgebunden Meßwerte an die Auswerte- und Versorgungselektronik AV übermittelt.

Beim erfindungsgemäßen Meßgeräte-System weist, wie in Fign. 4, 5 und 7 jeweils gezeigt bzw. wie aus deren Zusammenschau ohne weiteres ersichtlich, zumindest der Meßumformer MU2 desweiteren auch eine Funkeinheit RF2 auf. Zudem ist der Meßumformer MU2 auch eingerichtet, das Aufnehmersignal s2 zu empfangen und in ein Funksignal m2, nämlich via Funkeinheit RF2 ausgesendete, eine Folge von die Meßgröße x2 quantisierenden Meßwerten M2 kabellos übertragende elektromagnetische Freiraumwellen zu wandeln. Nämliche Funkeinheit RF2 ist nach einer weiteren Ausgestaltung des Meßgeräte-Systems der Erfindung ferner dafür eingerichtet, zumindest das Funksignal m2 mit einer, beispielsweise auch anpassbaren und/oder weniger als 100mW (Milliwatt) betragenden, ersten Strahlungsleistung auszusenden und/oder zu wenigstens einer der Normen IEEE 802.15.4, beispielsweise nämlich WPAN, WirelessHART oder ZigBee, IEEE 802.11, beispielsweise nämlich WLAN oder WiFi, und IEEE 802.15.1, beispielsweise nämlich Bluetooth, konforme Funksignale zu verarbeiten, insb. nämlich auszusenden und/oder zu empfangen. Nach einer weiteren Ausgestaltung ist die Schnittstellenschaltung IF2 zudem dafür eingerichtet, die Funkeinheit IF2 in Abhängigkeit von einer momentanen Stromstärke des vorbezeichneten Schleifenstroms I1 zu steuern, beispielsweise nämlich derart, daß eine Strahlungsleistung mit der das Funksignal ausgesendet wird bei einer niedrigeren Stromstärke geringer ist als bei einer im Vergleich dazu höheren Stromstärke bzw. umgekehrt. Alternativ oder in Ergänzung kann der Meßumformer MU2 ferner auch eingerichtet sein, eine Eingangsspannung und/oder einen Eingangsstrom von dessen Schnittstellenschaltung IF2 zu überwachen. Im besondern kann der Meßumformer MU2 hierfür auch eingerichtet sein, via Funkeinheit RF2 ein Alarm-Funksignal, nämlich einen oder mehrere Defekte des Meßgeräte-Systems vermeldende Nachrichten kabellos übertragende elektromagnetische Freiraumwellen auszusenden, falls die Eingangsspannung einen dafür vorgegebenen Mindestwert unterschritten hat und/oder falls die Eingangsspannung einen dafür vorgegebenen Höchstwert überschritten hat und/oder falls der Eingangsstrom einen dafür vorgegebenen Mindestwert unterschritten hat und/oder falls der Eingangsstrom einen dafür vorgegebenen Höchstwert überschritten hat. Dementsprechend ist das Meßgerät FG2 nicht nur, wie bereits angedeutet, eingerichtet, zeitweise in einem ersten Betriebsmodus zu operieren, in dem nämlich der Meßaufnehmer MA2 das Aufnehmersignal s2 bereitstellt und in dem der Meßumformer MU2 nämliches Aufnehmersignal s2 empfängt und zumindest in das Funksignal m2 wandelt, sondern ist das Meßgerät FG2 zudem auch eingerichtet, zeitweise nicht im vorbezeichneten ersten Betriebsmodus und währenddessen zumindest zeitweise in einem zweiten Betriebsmodus zu operieren, in dem der Meßaufnehmer MA2 das Aufnehmersignal s2 nicht bereitstellt und/oder in dem der Meßumformer MU2 das Aufnehmersignal s2 nicht in das Funksignal m2 wandelt. Vorteilhaft kann der Meßumformer MU2 bzw. das damit gebildete Meßgerät FG2 ferner dafür eingerichtet sein, in Abhängigkeit von der Meßgröße x2 und/oder von wenigstens einem vom Meßumformer MU2, beispielsweise auch anhand des Aufnehmersignals s2 und/oder anhand eines Eingangsstroms der Schnittstellenschaltung IF2, ermittelten Betriebsparameter, der die via Schnittstellenschaltung IF2 (momentan bzw. absehbar demnächst) beziehbare elektrische Leistung P2 repräsentiert, selbsttätig den ersten Betriebsmodus zu deaktivieren und/oder den zweiten Betriebsmodus zu aktivieren; dies beispielsweise nämlich auch für den Fall, daß mittels des Meßumformers MU2 festgestellt ist, daß die vorbezeichnete elektrische Leistung P2 einen Bedarf des im ersten Betriebsmodus operierenden Meßgeräts FG2 an elektrischer Leistung nicht abzudecken vermag und/oder daß eine Stromstärke des Schleifenstroms I1 einen dafür vorgegebenen Mindestwert nicht erreicht. Alternativ oder in Ergänzung kann der Meßumformer MU2, mithin das damit gebildete Meßgerät FG2 zudem auch eingerichtet sein, in Abhängigkeit von dem wenigstens einen Betriebsparameter selbsttätig den zweiten Betriebsmodus zu deaktivieren und/oder den ersten Betriebsmodus zu aktivieren, beispielsweise nämlich falls mittels des Meßumformers MU2 festgestellt ist, daß die via Schnittstellenschaltung IF2 aus der Stromschleife 2L momentan zugeführte elektrische Leistung P2 den Bedarf des im ersten Betriebsmodus operierenden Meßgeräts FG2 an elektrischer Leistung abzudecken vermag und/oder daß eine Stromstärke des Eingangsstroms der Schnittstellenschaltung IF2 den dafür vorgegebenen Mindestwert erreicht oder überschritten hat. Ein als Betriebsparameter dienlicher Meßwert kann beispielsweise eine Stromstärke des vorbezeichneten Eingangsstroms der Schnittstellenschaltung IF2 oder ein davon abgeleiteter Parameterwert, wie z.B. eine zur elektrischen Leistung P2 proportionale quadrierte Stromstärke (I1² - P2).

Nach einer weiteren Ausgestaltung des Meßgeräte-Systems der Erfindung ist das Meßgerät FG2 ferner eingerichtet, dann - beispielsweise auch lediglich dann - im ersten Betriebsmodus zu operieren, wenn das Meßgerät FG1 in dessen ersten Betriebsmodus operiert bzw. dann wenn die von der Auswerte- und Versorgungselektronik AV in die Stromschleife eingespeiste elektrische Leistung P1 mehr als 100 mW, beispielsweise nämlich mehr als 200 mW (P1 ≥ 20 mA · 12 V), beträgt, und/oder im zweiten Betriebsmodus zu operieren während das Meßgerät FG1 in dessen zweiten Betriebsmodus operiert bzw. wenn die von der Auswerte- und Versorgungselektronik AV in die Stromschleife eingespeiste elektrische Leistung P1, mithin die via Schnittstellenschaltung IF2 aus der Stromschleife 2L momentan zugeführte elektrische Leistung P2, weniger als 100 mW, beispielsweise nämlich weniger als 50 mW (P1 ≤ 4 mA · 12 V), beträgt. Nach einer weiteren Ausgestaltung des Meßgeräte-Systems der Erfindung ist der Meßumformer MU2 zudem eingerichtet, in nämlichem zweiten Betriebsmodus des Meßgeräts FG2 das Ausgangssignal m1 der Schnittstellenschaltung IF1 des Meßumformers MU1 zu erfassen und in ein Ersatz-Funksignal, nämlich via Funkeinheit ausgesendete, eine Folge von die Meßgröße x1 quantisierenden Meßwerten kabellos übertragende elektromagnetische Freiraumwellen zu wandeln; dies im besonderen in der Weise, daß das Ersatz-Funksignal mit einer, ggf. auch anpassbaren und/oder weniger als 100mW betragenden und/oder im Vergleich zur vorbezeichneten ersten Strahlungsleistung des Funksignals m2 verminderten, zweiten Strahlungsleistung auszusenden.

Nach einer weiteren Ausgestaltung des Meßgeräte-Systems der Erfindung ist die Auswerte- und Versorgungselektronik AV zudem eingerichtet, das Meßsignal m1 des Meßgeräts FG1 zu verarbeiten, insb. nämlich zu empfangen und auszuwerten. Beispielsweise kann die Auswerte- und Versorgungselektronik AV dementsprechend auch eingerichtet sein, das Meßsignal m1 zu digitalisieren und/oder unter Verwendung nämlichen Meßsignals m1 die Meßgröße x1 repräsentierende, ggf. auch digitale, Meßwerte M1* zu ermitteln. Darüberhinaus kann die Auswerte- und Versorgungselektronik zudem eingerichtet sein, auch das Funksignal m2 des Meßgeräts FG2 zu verarbeiten, insb. nämlich zu empfangen und auszuwerten, beispielsweise nämlich unter Verwendung Funksignals m2 den vorbezeichneten Meßwerte M2 entsprechende bzw. die Meßgröße x2 repräsentierende, ggf. auch digitale, Meßwerte M2* zu ermitteln bzw. aus dem Funksignal m2 zu gewinnen.

## Patentansprüche

1. Meßgeräte-System, umfassend:
- ein, insb. als Zweileiter-Feldgerät ausgebildetes, erstes Meßgerät (FG1)
-- mit einem ersten Meßgrößen-Aufnehmer (MA1), der eingerichtet ist, auf eine erste Meßgröße (x1) anzusprechen und ein, insb. elektrisches, erstes Aufnehmersignal (s1) bereitzustellen, derart, daß nämliches erstes Aufnehmersignal einer Änderung der ersten Meßgröße mit einer Änderung wenigstens eines Signalparameters folgt,
-- und mit einem mit dem ersten Meßgrößen-Aufnehmer elektrisch verbundenen, insb. mittels wenigstens eines Mikroprozessors gebildeten, ersten Meßumformer (MU1), der eine, insb. als Schaltausgang und/oder TTY-Schnittstelle ausgebildete, Schnittstellenschaltung (IF1) sowohl zur leitungsgebundenen Energiespeisung als auch zur leitungsgebundenen Signalübertragung aufweist und der eingerichtet ist, nämliches erstes Aufnehmersignal zu empfangen und in ein Meßsignal (m1), nämlich ein die erste Meßgröße (x1) repräsentierendes, insb. als ein binärcodiertes Schaltsignal ausgebildetes, elektrisches Ausgangssignal der Schnittstellenschaltung (IF1) zu wandeln;
- ein zweites Meßgerät (FG2)
-- mit einem zweiten Meßgrößen-Aufnehmer (MA2), der eingerichtet ist, auf eine zweite Meßgröße (x2) anzusprechen und ein, insb. elektrisches, zweites Aufnehmersignal (s2) bereitzustellen, derart, daß nämliches zweites Aufnehmersignal einer Änderung der zweiten Meßgröße mit einer Änderung wenigstens eines Signalparameters folgt,
-- und mit einem mit dem zweiten Meßgrößen-Aufnehmer elektrisch verbundenen, insb. mittels wenigstens eines Mikroprozessors gebildeten, zweiten Meßumformer (MU2), der eine Schnittstellenschaltung (IF2) zur leitungsgebundenen Energiespeisung sowie eine Funkeinheit (RF2) aufweist und der eingerichtet ist, nämliches zweites Aufnehmersignal zu empfangen und in ein Funksignal (m2), nämlich via Funkeinheit ausgesendete, eine Folge von die zweite Meßgröße (x2) quantisierenden Meßwerten (M2) kabellos übertragende elektromagnetische Freiraumwellen zu wandeln;
- sowie eine Auswerte- und Versorgungselektronik (AV);
- wobei die Schnittstellenschaltung (IF1) des ersten Meßumformers (MU1) unter Bildung einer sowohl nämliche Schnittstellenschaltung als auch die Auswerte- und Versorgungselektronik involvierenden Stromschleife (2L) an die Auswerte- und Versorgungselektronik (AV) elektrisch angeschlossen ist;
- wobei die Schnittstellenschaltung (IF2) des zweiten Meßumformers (MU2) an den ersten Meßumformer (MU1), insb. nämlich dessen Schnittstellenschaltung (IF1) und/oder die damit gebildete Stromschleife (2L), elektrisch angeschlossen ist;
- wobei die Auswerte- und Versorgungselektronik (AV) eingerichtet ist, elektrische Leistung (P1), insb. mit einer elektrischen Spannung von mehr als 12 V und/oder weniger als 45 V, in die Stromschleife (2L) einzuspeisen;
- wobei der erste Meßumformer (MU1), insb. nämlich dessen Schnittstellenschaltung (IF1), eingerichtet ist, sowohl elektrische Leistung (P1) aus der Stromschleife (2L) zu beziehen als auch das Meßsignal (m1) an die Auswerte- und Versorgungselektronik (AV) zu senden, insb. nämlich durch Modulation eines von der Auswerte- und Versorgungselektronik getriebenen elektrischen Stroms (I1) in der Stromschleife (2L);
- und wobei der zweite Meßumformer (MU2), insb. dessen Schnittstellenschaltung (IF2), eingerichtet ist, elektrische Leistung (P2) aus der Stromschleife (2L) zu beziehen, insb. nämlich auch den zweiten Meßaufnehmer (MA2) und/oder die Funkeinheit (RF2) in Abhängigkeit von einer momentanen Stromstärke eines elektrischen Stroms in der Stromschleife (2L) zu steuern.

2. Meßgeräte-System nach dem vorherigen Anspruch, wobei die Auswerte- und Versorgungselektronik eingerichtet ist, das Meßsignal des ersten Meßgeräts zu verarbeiten, insb. nämlich zu empfangen und auszuwerten.

3. Meßgeräte-System nach dem vorherigen Anspruch,
- wobei die Auswerte- und Versorgungselektronik eingerichtet ist, das Meßsignal des ersten Meßgeräts zu digitalisieren; und/oder
- wobei die Auswerte- und Versorgungselektronik eingerichtet ist, unter Verwendung des Meßsignals des ersten Meßgeräts die erste Meßgröße repräsentierende, insb. digitale, Meßwerte zu ermitteln.

4. Meßgeräte-System nach einem der vorherigen Ansprüche,
- wobei die Stromschleife wenigstens eine aus zwei, insb. miteinander verdrillten, Einzeladern gebildete erste Zweidraht-Leitung aufweist,
- und wobei sowohl eine erste Einzelader der ersten Zweidraht-Leitung als auch eine zweite Einzelader der ersten Zweidraht-Leitung an die Auswerte- und Versorgungselektronik elektrisch angeschlossen ist, insb. derart, daß die erste Einzelader der ersten Zweidraht-Leitung eine Hinleitung der Stromschleife und/oder daß die zweite Einzelader der ersten Zweidraht-Leitung eine Rückleitung der Stromschleife bildet.

5. Meßgeräte-System nach dem vorherigen Anspruch,
- wobei die Stromschleife wenigstens eine aus zwei, insb. miteinander verdrillten, Einzeladern gebildete zweite Zweidraht-Leitung aufweist
- und wobei sowohl eine erste Einzelader der zweiten Zweidraht-Leitung als auch eine zweite Einzelader der zweiten Zweidraht-Leitung an den ersten Meßumformer elektrisch angeschlossen ist, insb. derart, daß die erste Einzelader der zweiten Zweidraht-Leitung an eine mit der Schnittstellenschaltung des ersten Meßumformers elektrisch verbundene erste Anschlußklemme des ersten Meßumformers elektrisch angeschlossen ist und daß die zweite Einzelader der zweiten Zweidraht-Leitung an eine mit der Schnittstellenschaltung des ersten Meßumformers elektrisch verbundene zweite Anschlußklemme des ersten Meßumformers elektrisch angeschlossen ist.

6. Meßgeräte-System nach dem vorherigen Anspruch,
- wobei die erste Einzelader der zweiten Zweidraht-Leitung auch an eine mit der Schnittstellenschaltung des zweiten Meßumformers elektrisch verbundene dritte Anschlußklemme des zweiten Meßumformers elektrisch angeschlossen ist,
- und wobei die zweite Einzelader der zweiten Zweidraht-Leitung auch an die zweite Anschlußklemme des zweiten Meßumformers elektrisch angeschlossen ist.

7. Meßgeräte-System nach einem der vorherigen Ansprüche,
- wobei die Schnittstellenschaltung des ersten Meßumformers eingerichtet ist, zur Norm IEC 61784-1 CPF1 konform modulierte Stromsignale zu verarbeiten, insb. nämlich zu senden und/oder zu empfangen; und/oder
- wobei die Schnittstellenschaltung des ersten Meßumformers eingerichtet ist, zur Norm IEC 61784-1 CPF3 konform modulierte Stromsignale zu verarbeiten, insb. nämlich zu senden und/oder zu empfangen; und/oder
- wobei die Schnittstellenschaltung des ersten Meßumformers eingerichtet ist, zur Norm IEC 61158 konform modulierte Stromsignale zu verarbeiten, insb. nämlich zu senden und/oder zu empfangen; und/oder
- wobei die Schnittstellenschaltung des ersten Meßumformers eingerichtet ist, mittels Frequenzumtastung modulierte Stromsignale, insb. nämlich zur Norm IEC 61784-1 CPF9 und/oder IEC 61158 konform modulierte Stromsignale, zu verarbeiten, insb. nämlich zu senden und/oder zu empfangen; und/oder
- wobei die Schnittstellenschaltung des zweiten Meßumformers eingerichtet ist, mittels Frequenzumtastung modulierte Stromsignale, insb. nämlich zur Norm IEC 61784-1 CPF9 und/oder IEC 61158 konform modulierte Stromsignale, zu verarbeiten, insb. nämlich zu senden und/oder zu empfangen; und/oder
- wobei die Funkeinheit des zweiten Meßumformers eingerichtet ist, zu wenigstens einer der Normen:
-- IEEE 802.15.4, insb. nämlich WPAN, WirelessHART oder ZigBee,
-- IEEE 802.11, insb. nämlich WLAN oder WiFi,
-- und IEEE 802.15.1, insb. nämlich Bluetooth, konforme Funksignale zu verarbeiten, insb. nämlich auszusenden und/oder zu empfangen; und/oder
- wobei der erste Meßumformer eingerichtet ist, das Ausgangssignal an die Auswerte- und Versorgungselektronik durch Lastmodulation eines Schleifenstroms, nämlich durch Modulation eines von der Auswerte- und Versorgungselektronik getriebenen elektrischen Stroms in der Stromschleife zu übermitteln, insb. derart, daß der Schleifenstrom in Abhängigkeit von der ersten Meßgröße mittels der Schnittstellenschaltung des ersten Meßumformers auf eine innerhalb eines Bereichs 4 - 20 mA liegende Stromstärke eingestellt wird; und/oder
- wobei der zweite Meßumformer eine mit dessen Schnittstellenschaltung elektrisch verbundene, insb. einen oder mehrere wiederaufladbare elektrochemische Speicher und/oder einen oder mehrere Superkondensatoren aufweisende, Speicherschaltung umfaßt, wobei die Speicherschaltung dafür eingerichtet ist, aus der Schnittstellenschaltung des zweiten Meßumformers bezogene elektrische Energie zu speichern und, insb. für die Generierung des zweiten Aufnehmersignals und/oder des Funksignals benötigte, elektrische Energie abzugeben, insb. nämlich falls eine via Schnittstellenschaltung des zweiten Meßumformers aus der Stromschleife momentan zugeführte elektrische Leistung einen momentanen Bedarf des zweiten Meßgeräts an elektrischer Leistung nicht deckt und/oder falls eine Stromstärke eines Eingangsstroms der Schnittstellenschaltung des zweiten Meßumformers einen dafür vorgegebenen Mindestwert nicht erreicht; und/oder
- wobei der zweite Meßumformer eingerichtet ist, einen Wert, insb. einen Momentanwert und/oder einen Effektivwert, einer via Schnittstellenschaltung des zweiten Meßumformers aus der Stromschleife momentan zugeführten elektrischen Leistung und/oder einer Stromstärke eines Eingangsstroms der Schnittstellenschaltung des zweiten Meßumformers zu ermitteln; und/oder
- wobei die Funkeinheit des zweiten Meßumformers eingerichtet ist, das Funksignal mit einer, insb. anpassbaren und/oder weniger als 100mW (Milliwatt) betragenden, ersten Strahlungsleistung auszusenden.

8. Meßgeräte-System nach einem der vorherigen Ansprüche, wobei die Schnittstellenschaltung des ersten Meßumformer eingerichtet ist, das als Meßsignal dienliche Ausgangssignal als ein, insb. zur DIN IEC 60381-1:1985-11 konformes, Einheitssignal, insb. nämlich als ein Stromsignal, auszugeben.

9. Meßgeräte-System nach dem vorherigen Anspruch, wobei die Schnittstellenschaltung des ersten Meßumformers eingerichtet ist, deren als Meßsignal dienliches Ausgangssignal als ein Stromsignal, insb. nämlich ein zur DIN IEC 60381-1:1985-11 konformes 4 - 20 mA-Stromsignal, auszugeben, insb. derart, daß das Meßsignal ein lediglich zwei diskrete Werte für die Meßgröße binär, nämlich nominell mit einer Stromstärke des elektrischen Stroms des Ausgangsignal von 4 mA oder 20 mA codierendes Schaltsignal ist.

10. Meßgeräte-System nach einem der vorherigen Ansprüche, wobei die Stromschleife zumindest auch die Schnittstellenschaltung des zweiten Meßumformers involviert, insb. derart, daß die Schnittstellenschaltung des ersten Meßumformers und die Schnittstellenschaltung des zweiten Meßumformers elektrisch in Serie geschaltet sind, insb. derart, daß ein von der Auswerte- und Versorgungselektronik getriebenen elektrischen Strom in der Stromschleife sowohl einem Strom des Ausgangssignals der Schnittstellenschaltung des ersten Meßumformers als auch einem Eingangsstrom der Schnittstellenschaltung des zweiten Meßumformers entspricht.

11. Meßgeräte-System nach dem vorherigen Anspruch, wobei die Schnittstellenschaltung des zweiten Meßumformers eingerichtet ist, gleichzeitig mit der Schnittstellenschaltung des ersten Meßumformers den Strom von deren Ausgangssignal und/oder einen von der Auswerte- und Versorgungselektronik getriebenen elektrischen Strom in der Stromschleife zu führen.

12. Meßgeräte-System nach einem der vorherigen Ansprüche,
- wobei das erste Meßgerät (FG1) eingerichtet ist, zeitweise in einem ersten Betriebsmodus zu operieren, in dem der erste Meßumformer das Meßsignal (m1) mit einem, insb. die erste Meßgröße repräsentierenden, Signalpegel, insb. nämlich eine Stromstärke eines elektrischen Stroms (11) in der Stromschleife, liefert, der größer als ein dafür vorgegebener Mindestwert ist, insb. derart, daß die von der Auswerte- und Versorgungselektronik in die Stromschleife eingespeiste elektrische Leistung mehr als 100 mW beträgt und/oder daß eine Stromstärke eines elektrischen Stroms (11) in der Stromschleife 20 mA beträgt,
- und wobei das zweite Meßgerät eingerichtet ist, zeitweise in einem ersten Betriebsmodus zu operieren, in dem der zweite Meßaufnehmer das zweite Aufnehmersignal bereitstellt und in dem der zweite Meßumformer nämliches zweites Aufnehmersignal empfängt und zumindest in das Funksignal wandelt, insb. nämlich dann, wenn das erste Meßgerät in dessen ersten Betriebsmodus operiert.

13. Meßgeräte-System nach dem vorherigen Anspruch, wobei das zweite Meßgerät eingerichtet ist, zeitweise nicht im ersten Betriebsmodus und währenddessen zumindest zeitweise in einem zweiten Betriebsmodus zu operieren, in dem der zweite Meßaufnehmer das zweite Aufnehmersignal nicht bereitstellt und/oder in dem der zweite Meßumformer das zweite Aufnehmersignal nicht in das Funksignal wandelt.

14. Meßgeräte-System nach dem vorherigen Anspruch,
- wobei der zweite Meßumformer eingerichtet ist, im zweiten Betriebsmodus des zweiten Meßgeräts das Ausgangssignal der Schnittstellenschaltung des ersten Meßumformers in ein Ersatz-Funksignal, nämlich via Funkeinheit ausgesendete, eine Folge von die erste Meßgröße quantisierenden Meßwerten kabellos übertragende elektromagnetische Freiraumwellen zu wandeln; und/oder
- wobei das zweite Meßgerät, insb. nämlich der zweite Meßumformer, eingerichtet ist, in Abhängigkeit von der zweiten Meßgröße und/oder von wenigstens einem vom zweiten Meßumformer, insb. anhand des zweiten Aufnehmersignals und/oder anhand eines Eingangsstroms der Schnittstellenschaltung des zweiten Meßumformers, ermittelten eine via Schnittstellenschaltung beziehbare elektrische Leistung repräsentierenden Betriebsparameter, insb. einer Stromstärke eines Eingangsstroms der Schnittstellenschaltung des zweiten Meßumformers oder einem davon abgeleiteten Parameterwert, selbsttätig den ersten Betriebsmodus zu deaktivieren und/oder den zweiten Betriebsmodus zu aktivieren, insb. nämlich falls mittels des zweiten Meßumformers festgestellt ist, daß eine via Schnittstellenschaltung des zweiten Meßumformers aus der Stromschleife momentan zugeführte elektrische Leistung einen Bedarf des im ersten Betriebsmodus operierenden zweiten Meßgeräts an elektrischer Leistung nicht deckt und/oder daß eine Stromstärke eines elektrischen Stroms in der Stromschleife einen dafür vorgegebenen Mindestwert nicht erreicht; und/oder
- wobei das zweite Meßgerät, insb. nämlich der zweite Meßumformer, eingerichtet ist, in Abhängigkeit von dem wenigstens einen Betriebsparameter selbsttätig den zweiten Betriebsmodus zu deaktivieren und/oder den ersten Betriebsmodus zu aktivieren, insb. nämlich falls mittels des zweiten Meßumformers festgestellt ist, daß eine via Schnittstellenschaltung des zweiten Meßumformers aus der Stromschleife momentan zugeführte elektrische Leistung den Bedarf des im ersten Betriebsmodus operierenden zweiten Meßgeräts an elektrischer Leistung zu decken vermag und/oder daß eine Stromstärke eines Eingangsstroms der Schnittstellenschaltung des zweiten Meßumformers einen dafür vorgegebenen Mindestwert erreicht oder überschritten hat.

15. Meßgeräte-System nach einem der vorherigen Ansprüche,
- wobei die Auswerte- und Versorgungselektronik eingerichtet ist, das Funksignal (m2) des zweiten Meßgeräts (FG2) zu verarbeiten, insb. nämlich zu empfangen und auszuwerten, insb. nämlich unter Verwendung Funksignals (m2) die zweite Meßgröße (x2) repräsentierende Meßwerte (M2*) zu ermitteln bzw. aus dem Funksignal (m2) zu gewinnen; und/oder
- wobei der zweite Meßumformer eingerichtet ist, eine Eingangsspannung und/oder einen Eingangsstrom der Schnittstellenschaltung des zweiten Meßumformers zu überwachen, insb. via Funkeinheit ein Alarm-Funksignal, nämlich einen Defekt des Meßgeräte-Systems vermeldende Nachrichten kabellos übertragende elektromagnetische Freiraumwellen auszusenden, falls die Eingangsspannung einen dafür vorgegebenen Mindestwert unterschritten hat und/oder falls die Eingangsspannung einen dafür vorgegebenen Höchstwert überschritten hat und/oder falls der Eingangsstrom einen dafür vorgegebenen Mindestwert unterschritten hat und/oder falls der Eingangsstrom einen dafür vorgegebenen Höchstwert überschritten hat; und/oder
- wobei das erste Meßgerät ein, insb. druckfestes und/oder explosionssichere und/oder gegen Eindringen von Staub in schädigenden Mengen schützendes und/oder gegen Eindringen von allseitigem Spritzwasser schützendes und/oder zumindest den Anforderungen der Schutzart IP 54 gemäß DIN EN 60529:2014-09 genügendes und/oder den Anforderungen der Zündschutzart "Druckfeste Kapslung (Ex-d)" gemäß EN 60079-1:2007 genügendes und/oder mit dem ersten Meßaufnehmer feste verbundenes, erstes Umformer-Gehäuse aufweist, innerhalb dem der erste Meßumformer zumindest teilweise untergebracht ist; und/oder
- wobei das zweite Meßgerät ein, insb. druckfestes und/oder explosionssichere und/oder gegen Eindringen von Staub in schädigenden Mengen schützendes und/oder gegen Eindringen von allseitigem Spritzwasser schützendes und/oder zumindest den Anforderungen der Schutzart IP 54 gemäß DIN EN 60529:2014-09 genügendes und/oder den Anforderungen der Zündschutzart "Druckfeste Kapslung (Ex-d)" gemäß EN 60079-1:2007 und/oder vom ersten Umformer-Gehäuse mehr als 1 m (Meter) entfernt angeordnetes und/oder mit dem zweiten Meßaufnehmer feste verbundenes, zweites Umformer-Gehäuse aufweist, innerhalb dem der zweite Meßumformer zumindest teilweise untergebracht ist; und/oder
- wobei der erste Meßumformer der Zündschutzart "Geräteschutz durch Eigensicherheit (Ex-i)" gemäß EN 60079 11:2012 und/oder der Zündschutzart "Erhöhte Sicherheit (Ex-e)" gemäß EN 60079-7:2007 genügt; und/oder
- wobei der zweite Meßumformer der Zündschutzart "Geräteschutz durch Eigensicherheit (Ex-i)" gemäß EN 60079-11:2012 und/oder und/oder der Zündschutzart "Erhöhte Sicherheit (Ex-e)" gemäß EN 60079-7:2007genügt.

16. Meßanordnung, umfassend:
- ein Meßgeräte-System (FG1, FG2, AV) nach einem der vorherigen Ansprüche;
- sowie ein, insb. mittels eines Tanks und/oder einer Rohrleitung gebildetes, Leitungssystem (LS), das dafür eingerichtet ist, ein strömungsfähiges Medium zu führen;
- wobei sowohl der erste Meßaufnehmer (MA1) als auch der zweite Meßaufnehmer (MA2), insb. mehr als 1 m voneinander beabstandet, in das Leitungssystem (LS) eingesetzt ist.

17. Meßanordnung nach dem vorherigen Anspruch,
- wobei der erste Meßaufnehmer (MA1) mehr als 1 m vom zweiten Meßaufnehmer (MA2) entfernt angeordnet ist; und/oder
- wobei der erste Meßumformer (MU1) mehr als 1 m vom zweiten Meßumformer (MU2) entfernt angeordnet ist; und/oder
- wobei der erste Meßumformer (MU1) mehr als 1 m von der Auswerte- und Versorgungselektronik (AV) entfernt angeordnet ist; und/oder
- wobei der zweite Meßumformer (MU2) mehr als 1 m von der Auswerte- und Versorgungselektronik (AV) entfernt angeordnet ist; und/oder
- wobei der erste Meßumformer (MU1) weniger als 1 m vom ersten Meßaufnehmer (MA1) entfernt angeordnet ist; und/oder
- wobei der zweite Meßumformer (MU1) weniger als 1 m vom zweiten Meßaufnehmer (MA2) entfernt angeordnet ist.

## Claims

1. Measuring device system, comprising:
- a first measuring device (FG1), particularly designed as a two-wire field device,
-- with a first measured variable sensor (MA1), which is designed to respond to a first measured variable (x1) and to provide a first sensor signal (s1), particularly electrical, in such a way that said first sensor signal follows a change of the first measured variable with a change of at least a signal parameter,
-- and with a first transmitter (Mill) electrically connected to the first measured variable sensor, wherein said transmitter is formed particularly by means of at least a microprocessor and has an interface circuit (IF1), particularly formed as a switch output and/or a TTY interface, both for the supply of energy by cable and for signal transmission by cable, and wherein said transmitter is designed to receive said first sensor signal and to convert it into a measuring signal (m1), specifically an electrical output signal of the interface circuit (IF1) representing the first measured variable (x1), wherein said signal is particularly formed as a binarycoded switch signal;
- a second measuring device (FG2)
-- with a second measured variable sensor (MA2), which is designed to respond to a second measured variable (x2) and to provide a second sensor signal (s2), particularly electrical, in such a way that said second sensor signal follows a change of the second measured variable with a change of at least a signal parameter,
-- and with a second transmitter (MU2) electrically connected to the second measured variable sensor, wherein said transmitter is formed particularly by means of at least a microprocessor and has an interface circuit (IF2) for the supply of energy by cable and a radio unit (RF2) and is designed to receive said second sensor signal and to convert it into a radio signal (m2), specifically free space waves, emitted by the radio unit, and wirelessly transmitting a series of measured values (M2) quantifying the second measured variable (x2);
- and an evaluation and supply electronics unit (AV);
- wherein the interface circuit (IF1) of the first transmitter (MU1) is electrically connected to the evaluation and supply electronics unit (AV) forming a current loop (2L) involving both the interface circuit and the evaluation and supply electronics unit;
- wherein the interface circuit (IF2) of the second transmitter (MU2) is electrically connected to the first transmitter (MU1), particularly its interface circuit (IF1) and/or to the current loop (2L) formed with it;
- wherein the evaluation and supply electronics unit (AV) is designed to feed electrical power (P1) into the current loop (2L), particularly with an electrical voltage greater than 12 V and/or less than 45 V;
- wherein the first transmitter (MU1), particularly its interface circuit (IF1), is designed both to draw electrical power (P1) from the current loop (2L) and to transmit the measuring signal (m1) to the evaluation and supply electronics unit (AV), particularly by modulating an electrical current (11) driven by the evaluation and supply electronics unit in the current loop (2L);
- and wherein the second transmitter (MU2), particularly its interface circuit (IF2), is designed to draw electrical power (P2) from the current loop (2L), particularly to also control the second sensor (MA2) and/or the radio unit (RF2) depending on a current electrical intensity of an electrical current in the current loop (2L).

2. Measuring device system as claimed in the previous claim, wherein the evaluation and supply electronics unit is designed to process the measuring signal of the first measuring device, particularly to receive and evaluate it.

3. Measuring device system as claimed in the previous claim,
- wherein the evaluation and supply electronics unit is designed to digitalize the measuring signal of the first measuring device; and/or
- wherein the evaluation and supply electronics unit is designed to determine measured values, particularly digital values, representing the first measured variable using the measuring signal of the first measuring device.

4. Measuring device system as claimed in one of the previous claims,
- wherein the current loop has at least a first two-wire line formed by two individual conductors, particularly twisted together,
- and wherein both a first individual conductor of the first two-wire line and a second individual conductor of the first two-wire line are electrically connected to the evaluation and supply electronics unit, particularly in such a way that the first individual conductor of the first two-wire line forms a feed line of the current loop and/or the second individual conductor of the first two-wire line forms a return line of the current loop.

5. Measuring device system as claimed in the previous claim,
- wherein the current loop has at least a second two-wire line formed by two individual conductors, particularly twisted together
- and wherein both a first individual conductor of the second two-wire line and a second individual conductor of the second two-wire line are electrically connected to the first transmitter, particularly in such a way that the first individual conductor of the second two-wire line is electrically connected to a first connection terminal of the first transmitter, which is electrically connected to the interface circuit of the first transmitter, and that the second individual conductor of the second two-wire line is electrically connected to a second connection terminal of the first transmitter, which is electrically connected to the interface circuit of the first transmitter.

6. Measuring device system as claimed in the previous claim,
- wherein the first individual conductor of the second two-wire line is also electrically connected to a third connection terminal of the second transmitter, which is electrically connected to the interface circuit of the second transmitter,
- and wherein the second individual conductor of the second two-wire line is also electrically connected to the second connection terminal of the second transmitter.

7. Measuring device system as claimed in one of the previous claims,
- wherein the interface circuit of the first transmitter is designed to process, particularly to send and/or to receive, current signals modulated in compliance with the IEC 61784-1 CPF1 standard; and/or
- wherein the interface circuit of the first transmitter is designed to process, particularly to send and/or to receive, current signals modulated in compliance with the IEC 61784-1 CPF3 standard; and/or
- wherein the interface circuit of the first transmitter is designed to process, particularly to send and/or to receive, current signals modulated in compliance with the IEC 61158 standard; and/or
- wherein the interface circuit of the first transmitter is designed to process, particularly to send and/or to receive, current signals modulated using frequency key shifting, particularly current signals modulated in compliance with the IEC 61784-1 CPF9 and/or IEC 61158 standard; and/or
- wherein the interface circuit of the second transmitter is designed to process, particularly to send and/or receive, current signals modulated using frequency key shifting, particularly current signals modulated in compliance with the IEC 61784-1 CPF9 and/or IEC 61158 standard; and/or
- wherein the radio unit of the second transmitter is designed to process, particularly to send and/or to receive radio signals complying with at least one of the following standards:
-- IEEE 802.15.4, particularly WPAN, WirelessHART or ZigBee,
-- IEEE 802.11, particularly WLAN or WiFi,
-- and IEEE 802.15.1, particularly Bluetooth; and/or
- wherein the first transmitter is designed to transmit the output signal to the evaluation and supply electronics unit through load modulation of a loop current, specifically by modulating an electrical current driven by the evaluation and supply electronics unit in the current loop, particularly in such a way that the loop current is set to a current intensity within the 4 to 20 mA range by means of the interface circuit of the first transmitter depending on the first measured variable; and/or
- wherein the second transmitter comprises a storage circuit electrically connected to the interface circuit, particularly having one or more rechargeable electrochemical storage units and/or one or more super capacitors, wherein the storage circuit is designed to save electrical energy obtained from the interface circuit of the second transmitter and to provide electrical energy particularly required for the generation of the second sensor signal and/or of the radio signal, particularly if an electrical power currently supplied from the current loop via the interface circuit of the second transmitter does not cover a current demand of the second measuring device for electrical power and/or if an intensity of an input current of the interface circuit of the second transmitter does not reach a minimum value predefined for this purpose; and/or
- wherein the second transmitter is designed to determine a value, particularly an instantaneous value and/or an effective value, of an electrical power currently supplied from the current loop via the interface circuit of the second transmitter and/or an intensity of an input current of the interface circuit of the second transmitter; and/or
- wherein the radio unit of the second transmitter is designed to transmit the radio signal with a first radiated power, particularly adaptable and/or less than 100 mW (milliwatts).

8. Measuring device system as claimed in one of the previous claims, wherein the interface circuit of the first transmitter is designed to output the output signal serving as the measuring signal in the form of a standardized signal, particularly in compliance with the DIN IEC 60381-1:1985-11 standard, particularly as a current signal.

9. Measuring device system as claimed in the previous claim, wherein the interface circuit of the first transmitter is designed to output its output signal serving as the measuring signal as a current signal, particularly a 4 to 20 mA current signal in compliance with the DIN IEC 60381-1:1985-11 standard, particularly in such a way that the measuring signal is a switch signal only coding two discrete values for the measured variable in binary format, specifically nominally with an intensity of the electrical current of the output signal of 4 mA or 20 mA.

10. Measuring device system as claimed in one of the previous claims, wherein the current loop also at least involves the interface circuit of the second transmitter, particularly in such a way that the interface circuit of the first transmitter and the interface circuit of the second transmitter are connected electrically in series, particularly in such a way that an electrical current in the current loop driven by the evaluation and supply electronics unit corresponds both to a current of the output signal of the interface circuit of the first transmitter and to an input current of the interface circuit of the second transmitter.

11. Measuring device system as claimed in the previous claim, wherein the interface circuit of the second transmitter is designed to conduct the current of its output signal and/or an electrical current driven by the evaluation and supply electronics unit in the current loop simultaneously with the interface circuit of the first transmitter.

12. Measuring device system as claimed in one of the previous claims,
- wherein the first measuring device (FG1) is designed to operate temporarily in a first operating mode in which the first transmitter supplies the measuring signal (m1) with a signal level particularly representing the first measured variable, particularly a current intensity of an electrical current (11) in the current loop, wherein said level is greater than a minimum value predefined for this purpose, particularly in such a way that the electrical power introduced into the current loop by the evaluation and supply electronics unit is greater than 100 mW and/or that an intensity of an electrical current (11) in the current loop is 20 mA,
- and wherein the second measuring device is designed to operate temporarily in a first operating mode in which the second sensor supplies the second sensor signal and in which the second transmitter receives said second sensor signal and converts it at least into the radio signal, particularly when the first measuring device is operating in its first operating mode.

13. Measuring device system as claimed in the previous claim, wherein the second measuring device is designed not to operate in the first operating mode and, during this time, to operate at least temporarily in a second operating mode, in which the second sensor does not supply the second sensor signal and/or in which the second transmitter does not convert the second sensor signal into the radio signal.

14. Measuring device system as claimed in the previous claim,
- wherein, in the second operating mode of the second measuring device, the second transmitter is designed to convert the output signal of the interface circuit of the first transmitter into a replacement radio signal, specifically free space electromagnetic waves that are transmitted wirelessly via the radio unit and transmit a series of measured values quantifying the first measured variable; and/or
- wherein the second measuring device, particularly the second transmitter, is designed to automatically deactivate the first operating mode and/or activate the second operating mode as a function of the second measured variable and/or of at least an operating parameter representing an electrical power that can be obtained via the interface circuit, wherein said parameter is determined by the second transmitter, particularly using the second sensor signal and/or using an input current of the interface circuit of the second transmitter, particularly an intensity of an input current of the interface circuit of the second transmitter or a parameter value which is derived from it, particularly if - by means of the second transmitter - it is found that an electrical power currently supplied from the current loop via the interface circuit of the second transmitter does not cover a need for electrical power of the second measuring device operating in the first operating mode and/or an intensity of an electrical current in the current loop does not reach a minimum value predefined for this purpose; and/or
- wherein the second measuring device, particularly the second transmitter, is designed to automatically deactivate the second operating mode and/or activate the first operating mode as a function of the at least one operating parameter, particularly if - by means of the second transmitter - it is found that an electrical power currently supplied from the current loop via the interface circuit of the second transmitter is able to cover the need for electrical power of the second measuring device operating in the first operating mode and/or an intensity of an input current of the interface circuit of the second transmitter has reached or exceeded a minimum value predefined for this purpose.

15. Measuring device system as claimed in one of the previous claims,
- wherein the evaluation and supply electronics unit is designed to process, particularly to receive and evaluate, the radio signal (m2) of the second measuring device (FG2), particularly to determine measured values (M2*) representing the second measured variable (x2) using the radio signal (m2) or to obtain them from the radio signal (m2); and/or
- wherein the second transmitter is designed to monitor an input voltage and/or an input current of the interface circuit of the second transmitter, particularly to emit an alarm radio signal via the radio unit, specifically free space electromagnetic waves wirelessly transmitting messages signaling a defect in the measuring device system, if the input voltage is less than a minimum value predefined for this purpose and/or if the input voltage is greater than a maximum value predefined for this purpose and/or if the input current is less than a minimum value predefined for this purpose and/or if the input current is greater than a maximum value predefined for this purpose; and/or
- wherein the first measuring device has a first transmitter housing, particularly pressure-resistant and/or explosion-proof and/or protecting against the penetration of dust in harmful quantities and/or protecting against the penetration of splash water from all sides and/or satisfying at least the requirements of IP 54 protection according to the DIN EN 60529:2014-09 standard and/or satisfying the requirements of "flameproof enclosure (Ex-d)" explosion protection according to the EN 60079-1:2007 standard and/or permanently connected to the first sensor, wherein the first transmitter is at least partially accommodated in said housing; and/or
- wherein the second measuring device has a second transmitter housing, particularly pressure-resistant and/or explosion-proof and/or protecting against the penetration of dust in harmful quantities and/or protecting against the penetration of splash water from all sides and/or satisfying at least the requirements of IP 54 protection according to the DIN EN 60529:2014-09 standard and/or satisfying the requirements of the "flameproof enclosure (Ex-d)" explosion protection according to the EN 60079-1:2007 standard and/or arranged at a distance of more than 1 m (meter) from the first transmitter housing and/or permanently connected to the second sensor, wherein the second transmitter is at least partially accommodated in said housing; and/or
- wherein the first transmitter satisfies the "device protection through intrinsic safety (Ex-i)" explosion protection according to the EN 60079 11:2012 standard and/or the "increased safety (Ex-e)" explosion protection according to the EN 60079-7:2007 standard; and/or
- wherein the second transmitter satisfies the "device protection through intrinsic safety (Ex-i)" explosion protection according to the EN 60079-11:2012 standard and/or the "increased safety (Ex-e)" explosion protection according to the EN 60079-7:2007 standard.

16. Measuring arrangement, comprising:
- a measuring device system (FG1, FG2, AV) as claimed in one of the previous claims;
- and a pipe system (LS) particularly formed by a tank and/or a pipe, wherein said system is designed to conduct a medium that can flow;
- wherein both the first sensor (MA1) and the second sensor (MA2) are inserted into the pipe system (LS), particularly at a distance of more than 1 m from one another.

17. Measuring arrangement as claimed in the previous claim,
- wherein the first sensor (MA1) is arranged more than 1 m from the second sensor (MA2); and/or
- wherein the first transmitter (MU1) is arranged more than 1 m from the second transmitter (MU2); and/or
- wherein the first transmitter (MU1) is arranged more than 1 m from the evaluation and supply electronics unit (AV); and/or
- wherein the second transmitter (MU2) is arranged more than 1 m from the evaluation and supply electronics unit (AV); and/or
- wherein the first transmitter (MU1) is arranged less than 1 m from the first sensor (MA1); and/or
- wherein the second transmitter (MU2) is arranged less than 1 m from the second sensor (MA2).

## Revendications

1. Système d'appareils de mesure, comprenant :
- un premier appareil de mesure (FG1), conçu notamment sous la forme d'un appareil de terrain 2 fils,
-- avec un premier capteur de grandeur de mesure (MA1), lequel est conçu pour réagir à une première grandeur de mesure (x1) et pour fournir un premier signal de capteur (s1), notamment électrique, de telle sorte que ledit premier signal de capteur suive une modification de la première grandeur de mesure avec une modification d'au moins un paramètre de signal,
-- et avec un premier transmetteur (MU1) relié électriquement au premier capteur de grandeur de mesure, lequel transmetteur est constitué notamment au moyen d'au moins un microprocesseur, lequel transmetteur présente un circuit d'interface (IF1), notamment réalisé sous la forme d'une sortie de commutation et/ou d'une interface TTY, aussi bien pour l'alimentation en énergie par câble que pour la transmission de signaux par câble, et lequel transmetteur est conçu pour recevoir ledit premier signal de capteur et le convertir en un signal de mesure (m1), à savoir un signal de sortie électrique du circuit d'interface (IF1) représentant la première grandeur de mesure (x1), lequel signal est notamment réalisé sous la forme d'un signal de commutation codé en binaire ;
- un deuxième appareil de mesure (FG2)
-- avec un deuxième capteur de grandeur de mesure (MA2), lequel est conçu pour répondre à une deuxième grandeur de mesure (x2) et pour fournir un deuxième signal de capteur (s2), notamment électrique, de telle sorte que ce deuxième signal de capteur suive une modification de la deuxième grandeur de mesure avec une modification d'au moins un paramètre de signal,
-- et avec un deuxième transmetteur (MU2) relié électriquement au deuxième capteur de grandeur de mesure, lequel transmetteur est constitué notamment au moyen d'au moins un microprocesseur, lequel transmetteur présente un circuit d'interface (IF2) pour l'alimentation en énergie par câble ainsi qu'une unité radio (RF2) et lequel transmetteur est conçu pour recevoir ledit deuxième signal de capteur et le convertir en un signal radio (m2), à savoir des ondes électromagnétiques en espace libre transmises sans fil via l'unité radio, une suite de valeurs mesurées (M2) quantifiant la deuxième grandeur de mesure (x2) ;
- ainsi qu'une électronique d'exploitation et d'alimentation (AV) ;
- le circuit d'interface (IF1) du premier transmetteur (MU1) étant raccordé électriquement à l'électronique d'exploitation et d'alimentation (AV) en formant une boucle de courant (2L) impliquant aussi bien le circuit d'interface que l'électronique d'exploitation et d'alimentation ;
- le circuit d'interface (IF2) du deuxième transmetteur (MU2) étant raccordé électriquement au premier transmetteur (MU1), notamment à son circuit d'interface (IF1) et/ou à la boucle de courant (2L) formée avec celui-ci ;
- l'électronique d'exploitation et d'alimentation (AV) étant conçue pour alimenter la boucle de courant (2L) en puissance électrique (P1), notamment avec une tension électrique supérieure à 12 V et/ou inférieure à 45 V ;
- le premier transmetteur (MU1), notamment son circuit d'interface (IF1), étant conçu à la fois pour prélever la puissance électrique (P1) de la boucle de courant (2L) et pour transmettre le signal de mesure à l'unité de mesure (m1), notamment par modulation d'un courant électrique (11) commandé par l'électronique d'exploitation et d'alimentation dans la boucle de courant (2L) ;
- et le deuxième transmetteur (MU2), notamment son circuit d'interface (IF2), étant conçu pour prélever la puissance électrique (P2) de la boucle de courant (2L), notamment pour commander également le deuxième capteur (MA2) et/ou l'unité radio (RF2) en fonction d'une intensité momentanée d'un courant électrique dans la boucle de courant (2L).

2. Système d'appareils de mesure selon la revendication précédente, pour lequel l'électronique d'exploitation et d'alimentation est conçue pour traiter le signal de mesure du premier appareil de mesure, notamment pour le recevoir et l'exploiter.

3. Système d'appareils de mesure selon la revendication précédente,
- pour lequel l'électronique d'exploitation et d'alimentation est conçue pour numériser le signal de mesure du premier appareil de mesure ; et/ou
- pour lequel l'électronique d'exploitation et d'alimentation est conçue pour déterminer des valeurs mesurées, notamment numériques, représentant la première grandeur de mesure en utilisant le signal de mesure du premier appareil de mesure.

4. Système d'appareils de mesure selon l'une des revendications précédentes,
- pour lequel la boucle de courant présente au moins une première ligne bifilaire formée de deux conducteurs individuels, notamment torsadés entre eux,
- et pour lequel aussi bien un premier conducteur individuel de la première ligne bifilaire qu'un deuxième conducteur individuel de la première ligne bifilaire sont raccordés électriquement à l'électronique d'exploitation et d'alimentation, notamment de telle sorte que le premier conducteur individuel de la première ligne bifilaire constitue une ligne aller de la boucle de courant et/ou que le deuxième conducteur individuel de la première ligne bifilaire constitue une ligne retour de la boucle de courant.

5. Système d'appareils de mesure selon la revendication précédente,
- pour lequel la boucle de courant présente au moins une deuxième ligne bifilaire formée de deux conducteurs individuels, notamment torsadés entre eux
- et pour lequel aussi bien un premier conducteur individuel de la deuxième ligne bifilaire qu'un deuxième conducteur individuel de la deuxième ligne bifilaire sont raccordés électriquement au premier transmetteur, notamment de telle sorte que le premier conducteur individuel de la deuxième ligne bifilaire est raccordé électriquement à une première borne de raccordement du premier transmetteur, reliée électriquement au circuit d'interface du premier transmetteur, et que le deuxième conducteur individuel de la deuxième ligne bifilaire est raccordé électriquement à une deuxième borne de raccordement du premier transmetteur, reliée électriquement au circuit d'interface du premier transmetteur.

6. Système d'appareils de mesure selon la revendication précédente,
- pour lequel le premier conducteur individuel de la deuxième ligne bifilaire est également raccordé électriquement à une troisième borne de raccordement du deuxième transmetteur, reliée électriquement au circuit d'interface du deuxième transmetteur,
- et pour lequel le deuxième conducteur individuel de la deuxième ligne bifilaire est également raccordé électriquement à la deuxième borne de raccordement du deuxième transmetteur.

7. Système d'appareils de mesure selon l'une des revendications précédentes,
- pour lequel le circuit d'interface du premier transmetteur est conçu pour traiter des signaux de courant modulés conformément à la norme IEC 61784-1 CPF1, notamment pour les envoyer et/ou les recevoir ; et/ou
- pour lequel le circuit d'interface du premier transmetteur est conçu pour traiter des signaux de courant modulés conformément à la norme IEC 61784-1 CPF3, notamment pour les envoyer et/ou les recevoir ; et/ou
- pour lequel le circuit d'interface du premier transmetteur est conçu pour traiter des signaux de courant modulés conformément à la norme IEC 61158, notamment pour les envoyer et/ou les recevoir ; et/ou
- pour lequel le circuit d'interface du premier transmetteur est conçu pour traiter des signaux de courant modulés par déplacement de fréquence, notamment des signaux de courant modulés conformément à la norme IEC 61784-1 CPF9 et/ou IEC 61158, notamment pour les envoyer et/ou les recevoir ; et/ou
- pour lequel le circuit d'interface du deuxième transmetteur est conçu pour traiter, notamment pour émettre et/ou recevoir, des signaux de courant modulés par déplacement de fréquence, notamment des signaux de courant modulés conformément à la norme IEC 61784-1 CPF9 et/ou IEC 61158 ; et/ou
- pour lequel l'unité radio du deuxième transmetteur est conçue pour être conforme à au moins l'une des normes suivantes :
-- IEEE 802.15.4, notamment WPAN, WirelessHART ou ZigBee,
-- IEEE 802.11, notamment WLAN ou WiFi,
-- et IEEE 802.15.1, notamment Bluetooth ; et/ou
- pour lequel le premier transmetteur est conçu pour transmettre le signal de sortie à l'électronique d'exploitation et d'alimentation par modulation de charge d'un courant de boucle, à savoir par modulation d'un courant électrique commandé par l'électronique d'exploitation et d'alimentation dans la boucle de courant, notamment de telle sorte que le courant de boucle est réglé en fonction de la première grandeur de mesure au moyen du circuit d'interface du premier transmetteur à une intensité de courant située dans une gamme de 4 à 20 mA ; et/ou
- pour lequel le deuxième transmetteur comprend un circuit de stockage relié électriquement à son circuit d'interface, présentant notamment un ou plusieurs accumulateurs électrochimiques rechargeables et/ou un ou plusieurs supercondensateurs, le circuit de stockage étant conçu pour stocker l'énergie électrique obtenue à partir du circuit d'interface du deuxième transmetteur et pour fournir l'énergie électrique nécessaire, notamment pour la génération du deuxième signal de capteur et/ou du signal radio, notamment dans le cas où une puissance électrique prélevée momentanément de la boucle de courant via le circuit d'interface du deuxième transmetteur ne couvre pas un besoin momentané du deuxième appareil de mesure en puissance électrique et/ou dans le cas où une intensité d'un courant d'entrée du circuit d'interface du deuxième transmetteur n'atteint pas une valeur minimale prédéfinie à cet effet ; et/ou
- pour lequel le deuxième transmetteur est conçu pour déterminer une valeur, notamment une valeur instantanée et/ou une valeur efficace, d'une puissance électrique prélevée momentanément de la boucle de courant via le circuit d'interface du deuxième transmetteur et/ou d'une intensité d'un courant d'entrée du circuit d'interface du deuxième transmetteur ; et/ou
- pour lequel l'unité radio du deuxième transmetteur est conçue pour émettre le signal radio avec une première puissance de rayonnement, notamment adaptable et/ou inférieure à 100 mW (milliwatts).

8. Système d'appareils de mesure selon l'une des revendications précédentes, pour lequel le circuit d'interface du premier transmetteur est conçu pour délivrer le signal de sortie servant de signal de mesure sous la forme d'un signal unitaire, notamment conforme à la norme DIN IEC 60381-1:1985-11, à savoir notamment un signal de courant.

9. Système d'appareils de mesure selon la revendication précédente, pour lequel le circuit d'interface du premier transmetteur est conçu pour délivrer son signal de sortie servant de signal de mesure sous la forme d'un signal de courant, notamment un signal de courant de 4 à 20 mA conforme à la norme DIN IEC 60381-1:1985-11, notamment de telle sorte que le signal de mesure est un signal de commutation codant seulement deux valeurs discrètes pour la grandeur de mesure en binaire, à savoir nominalement avec une intensité du courant électrique du signal de sortie de 4 mA ou 20 mA.

10. Système d'appareils de mesure selon l'une des revendications précédentes, pour lequel la boucle de courant implique au moins également le circuit d'interface du deuxième transmetteur, notamment de telle sorte que le circuit d'interface du premier transmetteur et le circuit d'interface du deuxième transmetteur sont couplés électriquement en série, notamment de telle sorte qu'un courant électrique dans la boucle de courant commandé par l'électronique d'exploitation et d'alimentation correspond à la fois à un courant du signal de sortie du circuit d'interface du premier transmetteur et à un courant d'entrée du circuit d'interface du deuxième transmetteur.

11. Système d'appareils de mesure selon la revendication précédente, pour lequel le circuit d'interface du deuxième transmetteur est conçu pour conduire, simultanément avec le circuit d'interface du premier transmetteur, le courant de son signal de sortie et/ou un courant électrique commandé par l'électronique d'exploitation et d'alimentation dans la boucle de courant.

12. Système d'appareils de mesure selon l'une des revendications précédentes,
- pour lequel le premier appareil de mesure (FG1) est conçu pour fonctionner temporairement dans un premier mode de fonctionnement dans lequel le premier transmetteur fournit le signal de mesure (m1) avec un niveau de signal représentant notamment la première grandeur de mesure, à savoir notamment une intensité d'un courant électrique (11) dans la boucle de courant, lequel niveau est supérieur à une valeur minimale prédéfinie à cet effet, notamment de telle sorte que la puissance électrique injectée dans la boucle de courant par l'électronique d'exploitation et d'alimentation est supérieure à 100 mW et/ou qu'une intensité d'un courant électrique (11) dans la boucle de courant est de 20 mA,
- et le deuxième appareil de mesure est conçu pour fonctionner temporairement dans un premier mode de fonctionnement dans lequel le deuxième capteur fournit le deuxième signal de capteur et dans lequel le deuxième transmetteur reçoit ce deuxième signal de capteur et le convertit au moins en le signal radio, notamment lorsque le premier appareil de mesure fonctionne dans son premier mode de fonctionnement.

13. Système d'appareils de mesure selon la revendication précédente, pour lequel le deuxième appareil de mesure est conçu pour ne pas fonctionner temporairement dans le premier mode de fonctionnement et pour fonctionner pendant ce temps au moins temporairement dans un deuxième mode de fonctionnement, mode de fonctionnement dans lequel le deuxième capteur ne fournit pas le deuxième signal de capteur et/ou dans lequel le deuxième transmetteur ne convertit pas le deuxième signal de capteur en signal radio.

14. Système d'appareils de mesure selon la revendication précédente,
- pour lequel le deuxième transmetteur est conçu pour convertir, dans le deuxième mode de fonctionnement du deuxième appareil de mesure, le signal de sortie du circuit d'interface du premier transmetteur en un signal radio de remplacement, à savoir des ondes électromagnétiques en espace libre transmises sans fil via l'unité radio, qui transmettent une suite de valeurs mesurées quantifiant la première grandeur de mesure ; et/ou
- pour lequel le deuxième appareil de mesure, notamment le deuxième transmetteur, est conçu pour désactiver automatiquement le premier mode de fonctionnement et/ou activer le deuxième mode de fonctionnement en fonction de la deuxième grandeur mesurée et/ou d'au moins un paramètre de fonctionnement représentant une puissance électrique pouvant être obtenue via le circuit d'interface, lequel paramètre est déterminé par le deuxième transmetteur, notamment à l'aide du deuxième signal de capteur et/ou à l'aide d'un courant d'entrée du circuit d'interface du deuxième transmetteur, notamment une intensité d'un courant d'entrée du circuit d'interface du deuxième transmetteur ou une valeur de paramètre qui en est dérivée, notamment s'il est constaté au moyen du deuxième transmetteur qu'une puissance électrique prélevée momentanément de la boucle de courant via le circuit d'interface du deuxième transmetteur ne couvre pas un besoin en puissance électrique du deuxième appareil de mesure opérant dans le premier mode de fonctionnement et/ou qu'une intensité d'un courant électrique dans la boucle de courant n'atteint pas une valeur minimale prédéfinie à cet effet ; et/ou
- pour lequel le deuxième appareil de mesure, notamment le deuxième transmetteur, est conçu pour désactiver automatiquement le deuxième mode de fonctionnement et/ou activer le premier mode de fonctionnement en fonction d'au moins un paramètre de fonctionnement, notamment s'il est constaté au moyen du deuxième transmetteur qu'une puissance électrique prélevée momentanément de la boucle de courant via le circuit d'interface du deuxième transmetteur est en mesure de couvrir les besoins en puissance électrique du deuxième appareil de mesure opérant dans le premier mode de fonctionnement et/ou qu'une intensité d'un courant d'entrée du circuit d'interface du deuxième transmetteur a atteint ou dépassé une valeur minimale prédéfinie à cet effet.

15. Système d'appareils de mesure selon l'une des revendications précédentes,
- pour lequel l'électronique d'exploitation et d'alimentation est conçue pour traiter le signal radio (m2) du deuxième appareil de mesure (FG2), notamment pour le recevoir et l'exploiter, notamment pour déterminer des valeurs mesurées (M2*) représentant la deuxième grandeur de mesure (x2) en utilisant le signal radio (m2) ou pour l'obtenir à partir du signal radio (m2) ; et/ou
- pour lequel le deuxième transmetteur est conçu pour surveiller une tension d'entrée et/ou un courant d'entrée du circuit d'interface du deuxième transmetteur, notamment pour émettre via l'unité radio un signal radio d'alarme, à savoir des ondes électromagnétiques en espace libre transmettant sans fil des messages signalant un défaut du système d'appareils de mesure, dans le cas où la tension d'entrée est inférieure à une valeur minimale prédéfinie à cet effet et/ou dans le cas où la tension d'entrée est supérieure à une valeur maximale prédéfinie à cet effet et/ou dans le cas où le courant d'entrée est inférieur à une valeur minimale prédéfinie à cet effet et/ou dans le cas où le courant d'entrée est supérieur à une valeur maximale prédéfinie à cet effet ; et/ou
- pour lequel le premier appareil de mesure présente un premier boîtier de transmetteur, notamment résistant à la pression et/ou antidéflagrant et/ou protégeant contre la pénétration de poussière en quantités nocives et/ou protégeant contre la pénétration de projections d'eau de tous côtés et/ou satisfaisant au moins aux exigences de l'indice de protection IP 54 selon la norme DIN EN 60529:2014-09 et/ou satisfaisant aux exigences du mode de protection antidéflagrant "Enveloppe antidéflagrante (Ex-d)" selon la norme EN 60079-1:2007 et/ou relié de manière fixe au premier capteur, boîtier à l'intérieur duquel le premier capteur est logé au moins partiellement ; et/ou
- pour lequel le deuxième appareil de mesure présente un deuxième boîtier de transmetteur, notamment résistant à la pression et/ou antidéflagrant et/ou protégeant contre la pénétration de poussière en quantités nocives et/ou protégeant contre la pénétration de projections d'eau de tous côtés et/ou satisfaisant au moins aux exigences de l'indice de protection IP 54 selon la norme DIN EN 60529:2014-09 et/ou satisfaisant aux exigences du mode de protection antidéflagrant "Enveloppe antidéflagrante (Ex-d)" selon la norme EN 60079-1:2007 et/ou éloigné de plus de 1 m (mètre) du premier boîtier de transmetteur et/ou relié de manière fixe au deuxième capteur, boîtier à l'intérieur duquel le deuxième transmetteur est logé au moins partiellement ; et/ou
- pour lequel le premier transmetteur satisfait au mode de protection antidéflagrant "Protection des appareils par sécurité intrinsèque (Ex-i)" selon EN 60079 11:2012 et/ou au mode de protection antidéflagrant "Sécurité augmentée (Ex-e)" selon la norme EN 60079-7:2007 ; et/ou
- pour lequel le deuxième transmetteur satisfait au mode de protection antidéflagrant "Protection des appareils par sécurité intrinsèque (Ex-i)" selon la norme EN 60079-11:2012 et/ou au mode de protection antidéflagrant "Sécurité augmentée (Ex-e)" selon la norme EN 60079-7:2007.

16. Dispositif de mesure, comprenant :
- un système d'appareils de mesure (FG1, FG2, AV) selon l'une des revendications précédentes ;
- ainsi qu'un système de conduite (LS) formé notamment au moyen d'un réservoir et/ou d'une conduite, lequel système est conçu pour guider un produit fluide ;
- aussi bien le premier capteur (MA1) que le deuxième capteur (MA2) étant insérés dans le système de conduite (LS), notamment à une distance de plus de 1 m l'un de l'autre.

17. Dispositif de mesure selon la revendication précédente,
- pour lequel le premier capteur (MA1) est disposé à plus de 1 m du deuxième capteur (MA2) ; et/ou
- pour lequel le premier transmetteur (MU1) est disposé à plus de 1 m du deuxième transmetteur (MU2) ; et/ou
- pour lequel le premier transmetteur (MU1) est disposé à plus de 1 m de l'électronique d'exploitation et d'alimentation (AV) ; et/ou
- pour lequel le deuxième transmetteur (MU2) est disposé à plus de 1 m de l'électronique d'exploitation et d'alimentation (AV) ; et/ou
- pour lequel le premier transmetteur (MU1) est disposé à moins de 1 m du premier capteur (MA1) ; et/ou
- pour lequel le deuxième transmetteur (MU2) est disposé à moins de 1 m du deuxième capteur (MA2).
